# EUROPÄISCHE PATENTSCHRIFT

(11) **EP 3 701 484 B1**
(45) Veröffentlichungstag und Bekanntmachung des Hinweises auf die Patenterteilung: **14.09.2022**
(21) Anmeldenummer: 18800523.5
(22) Anmeldetag: 26.10.2018
(51) Int. Cl.: G01B 11/04, G01B 5/00, G01D 21/00, G01B 11/24

(54) **ERFASSUNGSVORRICHTUNG UND VERFAHREN ZU EINER ERFASSUNG VON MULTIPLEN OBJEKTDATENSÄTZEN ZUMINDEST EINES OBJEKTS**
ACQUISITION SYSTEM AND METHOD FOR ACQUIRING MULTIPLE DATASETS OF AT LEAST AN OBJECT
SYSTÈME DE SAISIE ET MÉTHODE POUR LA SAISIE DE MULTIPLES ENSEMBLES DE DONNÉES D'AU MOINS UN OBJET

(30) Priorität: 27.10.2017 DE 102017219407
(43) Veröffentlichungstag der Anmeldung: 02.09.2020
(73) Patentinhaber: Robert Bosch GmbH, 70442 Stuttgart (DE)
(72) Erfinder: KETTERER, Darno Alexander, 71272 Renningen (DE); KETTERER, Christin, 71272 Renningen (DE); WEISS, Julian, 71229 Leonberg (DE); SCHMITT, Sebastian, 70173 Stuttgart (DE)
(86) Internationale Anmeldenummer: PCT/EP2018/079470
(87) Internationale Veröffentlichungsnummer: WO 2019/081741

(56) Entgegenhaltungen:
- US-A1- 2006 273 167
- US-A1- 2010 082 151
- US-A1- 2014 111 615

## Beschreibung

### Stand der Technik

Aus US 2014/0111615 A1, aus US 2010/0082151 A1 und aus US 2006/0273167 A1 sind bereits Erfassungsvorrichtungen zu einer zumindest teilautomatisierten Erfassung von multiplen Objektdaten zumindest eines Objekts, mit einer Bewegungsvorrichtung zur Erzeugung einer definierten Relativbewegung des zumindest einen Objekts, bekannt.

### Offenbarung der Erfindung

Die Erfindung geht aus von einer Erfassungsvorrichtung zu einer zumindest teilautomatisierten Erfassung von multiplen Objektdatensätzen zumindest eines Objekts, mit einer Bewegungsvorrichtung zur Erzeugung einer definierten Relativbewegung zwischen zumindest einer Objektdatenerfassungseinheit und des zumindest einen Objekts.

Erfindungsgemäß weist die Erfassungsvorrichtung zumindest die Objektdatenerfassungseinheit und zumindest eine Kontrasteinheit auf, wobei die Bewegungsvorrichtung eine Bewegungseinheit aufweist, die dazu vorgesehen ist, die Kontrasteinheit und die Objektdatenerfassungseinheit simultan zu bewegen und/oder die Bewegungseinheit eine Struktureinheit aufweist, die in zumindest einem Betriebszustand die Kontrasteinheit und die Objektdatenerfassungseinheit im Wesentlichen starr miteinander verbindet.

Ein "Objektdatensatz" umfasst zumindest zwei unterschiedliche Objektdaten über dasselbe Objekt. Bevorzugt umfasst ein multipler Objektdatensatz mehr als zehn unterschiedliche Objektdaten über dasselbe Objekt. Besonders bevorzugt umfasst ein multipler Objektdatensatz mehr als hundert unterschiedliche Objektdaten über dasselbe Objekt. Vorzugsweise umfasst ein multipler Objektdatensatz zumindest zwei unterschiedliche Arten von Objektdaten über dasselbe Objekt. Unter "Objektdaten" soll insbesondere zumindest eine Information verstanden werden, die dazu geeignet ist ein Objekt zu charakterisieren, insbesondere von einem weiteren Objekt zu unterscheiden. Bevorzugt umfassen Objektdaten einem Objekt inhärente Charakteristika. Objektdaten können insbesondere Aussehen, Form, Kontur, Farbe, Symmetrie, Gewicht, Material und/oder ein anderes dem Fachmann als sinnvoll erscheinendes Charakteristikum umfassen. Es ist auch denkbar, dass situationsbedingte Charakteristika erfasst werden, beispielsweise eine relative Anordnung zu einem weiteren Objekt, insbesondere einem Gegenstück, ein Verschmutzungsgrad und/oder eine temporäre Markierung.

Unter einer "Objektdatenerfassungseinheit" soll insbesondere eine Einheit verstanden werden, die zumindest zu einer Erfassung einer Art von Objektdaten vorgesehen ist. Bevorzugt handelt es sich bei der Objektdatenerfassungseinheit um eine bildgebende Erfassungseinheit. Insbesondere umfasst die Objektdatenerfassungseinheit eine Stehbildkamera. Alternativ umfasst die Objektdatenerfassungseinheit eine Laufbildkamera. Bevorzugt weist die Objektdatenerfassungseinheit eine Echtfarbkamera auf. Es ist auch denkbar, dass die Objektdatenerfassungseinheit eine Infrarotkamera und/oder TOF-Kamera aufweist. Bevorzugt umfasst ein Objektdatensatz zumindest zwei unterschiedliche Aufnahmen der Objektdatenerfassungseinheit. Besonders bevorzugt umfasst ein multipler Objektdatensatz zumindest zehn unterschiedliche Aufnahmen der Objektdatenerfassung, insbesondere aus zehn unterschiedlichen Perspektiven.

Unter einer "definierten Relativbewegung" soll insbesondere eine relative Änderung der Position und/oder Ausrichtung verstanden werden, welche zumindest in einem regulären Betriebszustand der Erfassungsvorrichtung aktiv steuerund/oder regelbar ist. Bevorzugt ist eine definierte Relativbewegung entlang jedes Bewegungsfreiheitsgrades steuer- und/oder regelbar. Insbesondere kann in zumindest einem regulären Betriebszustand jeder Erfassung von Objektdaten mit der Objektdatenerfassungseinheit Positionsdaten bezüglich der relativen Position und/oder Ausrichtung der Objektdatenerfassungseinheit zu dem Objekt eindeutig zugeordnet werden.

Eine Bewegungsvorrichtung zur Erzeugung einer definierten Relativbewegung umfasst zumindest eine Antriebseinheit und eine Führungseinheit. Eine Antriebseinheit der Bewegungsvorrichtung ist vorzugsweise elektromechanisch ausgebildet, insbesondere als Elektromotor oder beispielsweise zur Feinjustierung als Piezoelement. Es ist jedoch auch denkbar, dass eine Antriebseinheit der Bewegungsvorrichtung pneumatisch oder hydraulisch ausgebildet ist. Eine Führungseinheit ist insbesondere dazu vorgesehen, einen Gegenstand entlang der definierten Relativbewegung zu führen. Insbesondere ist eine Führungseinheit dazu vorgesehen, eine Bewegung entlang einer Richtung, die von der definierten Relativbewegung abweicht, zu minimieren. Eine Führungseinheit kann beispielsweise als Führungsschiene, Schwenkarm und/oder Gelenkarm ausgebildet sein. Bevorzugt ist die Bewegungsvorrichtung zur Erzeugung einer definierten Relativbewegung zwischen zumindest einer Objektdatenerfassungseinheit und des zumindest einen Objekts vorgesehen. Insbesondere ist die Bewegungsvorrichtung zur Erzeugung einer definierten Relativbewegung zwischen zumindest einer Objektdatenerfassungseinheit und einer Objektträgereinheit vorgesehen, welche insbesondere zu einer Positionierung des Objekts in einem Objektdatenerfassungsbereich der Erfassungsvorrichtung vorgesehen ist.

Unter einer "teilautomatisierten Erfassung" soll insbesondere verstanden werden, dass zumindest ein multipler Objektdatensatz in zumindest einem Betriebszustand bedienungsfrei, also insbesondere ohne Eingriff eines Bedieners, erfasst wird.

Unter "vorgesehen" soll insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Durch die erfindungsgemäße Ausgestaltung der Erfassungsvorrichtung kann vorteilhaft schnell eine große Objektdatenmenge über ein Objekt erfasst werden.

Weiter wird vorgeschlagen, dass die Bewegungsvorrichtung zur Erfassung von Objektdaten aus multiplen Perspektiven vorgesehen ist. Insbesondere kann eine Erfassung von Objektdaten aus multiplen Perspektiven durch eine mittels der Bewegungsvorrichtung erzeugten definierten Relativbewegung zwischen Objektdatenerfassungseinheit und Objekt erreicht werden. Unter einer "Perspektive" soll insbesondere eine bestimmte relative Anordnung, insbesondere Position und/oder Ausrichtung, der Objektdatenerfassungseinheit und des Objekts, insbesondere der Objektträgereinheit, verstanden werden. Bevorzugt werden zwei Perspektiven als identisch betrachtet, wenn sie sich einzig durch einen relativen Abstand zwischen Objektdatenerfassungseinheit und Objekts unterscheiden. Insbesondere umfassen multiple Perspektiven zumindest zwei verschiedene relative Anordnungen der Objektdatenerfassungseinheit und des Objekts, insbesondere der Objektträgereinheit. Bevorzugt umfassen multiple Perspektiven mehr als zehn verschiedene relative Anordnungen der Objektdatenerfassungseinheit und des Objekts, insbesondere der Objektträgereinheit. Besonders bevorzugt umfassen multiple Perspektiven mehr als zehn verschiedene Anordnungen der Objektdatenerfassungseinheit relativ zu dem Objekt, insbesondere der Objektträgereinheit. Insbesondere definieren zwei Perspektiven eine Erfassungsebene. Bevorzugt umfassen multiple Perspektiven zumindest zwei verschiedene Erfassungsebenen. Bevorzugt ist die Gesamtheit aller mit der Bewegungsvorrichtung möglichen Erfassungsebenen raumfüllend. Alternativ ist ein Abstand zwischen zwei möglichen Erfassungsebenen zumindest kleiner als 1 mm und/oder ein Winkelabstand zwischen zwei möglichen Erfassungsebenen zumindest kleiner als 1°. Durch die erfindungsgemäße Ausgestaltung der Erfassungsvorrichtung können multiple Objektdatensätze vorteilhaft Objektdaten von allen Seiten des Objekts umfassen.

Ferner wird vorgeschlagen, dass die Erfassungsvorrichtung eine Recheneinheit aufweist, die dazu vorgesehen ist, einen Objekteinlernprozess durchzuführen. Unter einem "Objekteinlernprozess" soll insbesondere eine Verarbeitung der multiplen Objektdatensätze zu einer weiteren Verwendung verstanden werden. Beispielsweise kann ein Objekteinlernprozess die Erstellung einer Rundumansicht des Objekts umfassen, die Erstellung eines dreidimensionalen Modells des Objekts und/oder die Extraktion charakteristischer Merkmale, insbesondere zu einem Ermöglichen einer Mustererkennung. Bevorzugt ist die Recheneinheit räumlich getrennt von der Bewegungsvorrichtung und/oder der Objektdatenerfassungseinheit ausgebildet. Bevorzugt ist die Recheneinheit als Server ausgebildet. Alternativ ist die Recheneinheit in die Objektdatenerfassungseinheit integriert. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Vorzugsweise sind die Bauteile der Recheneinheit auf einer gemeinsamen Platine angeordnet und/oder vorteilhaft in einem gemeinsamen Gehäuse angeordnet. Durch die erfindungsgemäße Ausgestaltung der Erfassungsvorrichtung kann insbesondere eine Verarbeitung der multiplen Objektdatensätze zu einer einheitlichen digitalen Repräsentation des Objekts erreicht werden.

Weiterhin wird eine weitere Recheneinheit vorgeschlagen, die dazu vorgesehen ist, eine Vorbewegung und Rückbewegung einer Objektdatenerfassungseinheit und/oder eines Objekts zur Datenerfassung zu nutzen. Bevorzugt wird die Bewegungsvorrichtung und die Objektdatenerfassungseinheit von einer, insbesondere zentralen, Recheneinheit gesteuert und/oder geregelt. Insbesondere steuert und/oder regelt die Recheneinheit die definierte Relativbewegung und zumindest den Erfassungszeitpunkt der Objektdatenerfassungseinheit. Vorzugsweise weist die Bewegungsvorrichtung eine definierte Ausgangslage auf, von welcher eine definierte Relativbewegung aus startet. Vorzugsweise ist die weitere Recheneinheit insbesondere dazu vorgesehen, eine Vorbewegung und Rückbewegung einer Objektdatenerfassungseinheit und/oder eines Objekts zu einer definierten Datenerfassung gezielt zu erzeugen und/oder zu verändern. Unter einer "Ausgangslage der Bewegungsvorrichtung" soll insbesondere verstanden, dass zumindest die Objektdatenerfassungseinheit und/oder das Objekt, insbesondere die Objektträgereinheit, sich an einer festgelegten Position innerhalb der Bewegungsvorrichtung befinden. Bevorzugt umfasst die Ausgangslage der Bewegungsvorrichtung eine Ausrichtung der Objektdatenerfassungseinheit und/oder des Objekts, insbesondere der Objektträgereinheit. Besonders bevorzugt befinden sich in einer Ausgangslage der Bewegungsvorrichtung alle beweglichen Einheiten und Elemente der Bewegungsvorrichtung an einer festgelegten Position und weisen eine festgelegte Ausrichtung auf. Unter einer "Vorbewegung" soll insbesondere eine Bewegung verstanden werden, die von der Ausgangslage wegführt. Unter einer "Rückbewegung" soll insbesondere eine Bewegung verstanden werden, die zur Ausgangslage hinführt. Eine Rückbewegung kann durch eine Umkehrung der Bewegungsbahn während der Vorbewegung oder durch eine Weiterbewegung entlang einer geschlossenen Bewegungsbahn realisiert werden. Durch die erfindungsgemäße Ausgestaltung der Erfassungsvorrichtung kann eine Totzeit der Maschine zwischen zwei Erfassungen verschiedener multipler Objektdatensätze zu einer Wiederherstellung der Ausgangsposition der Bewegungsvorrichtung vorteilhaft minimiert werden.

Weiter wird vorgeschlagen, dass die Bewegungsvorrichtung zumindest eine Bewegungseinheit zu einer definierten Bewegung der zumindest einen Objektdatenerfassungseinheit aufweist. Die Bewegungseinheit umfasst zumindest eine Führungseinheit der Objektdatenerfassungseinheit und eine Antriebseinheit. Ferner wird vorgeschlagen, dass die Bewegungseinheit dazu vorgesehen ist, die zumindest eine Objektdatenerfassungseinheit auf einer zumindest teilweise gekrümmten Bewegungsbahn zu führen. Unter einer "teilweise gekrümmten Bewegungsbahn" soll insbesondere verstanden werden, dass ein Verlauf der Bewegungsbahn in zumindest einem Teilbereich eine von null verschiedene Krümmung aufweist. Vorzugsweise soll darunter insbesondere verstanden werden, dass die Bewegungsbahn einen Kreisbogen umfasst. Bevorzugt umfasst der Kreisbogen einen Mittelpunktswinkel von mehr als 90°. Besonders bevorzugt umfasst der Kreisbogen einen Mittelpunktswinkel von mehr als 180°. Es ist auch denkbar, dass die Bewegungsbahn einen vollständigen Kreis beschreibt. Insbesondere definiert ein Mittelpunkt eines Kreisbogens der zumindest teilweise gekrümmten Bewegungsbahn einen Mittelpunkt eines Objekterfassungsbereichs, der dazu vorgesehen ist, ein Objekt zu einer Erfassung aufzunehmen. Unter einer "Krümmung" in einem Punkt eines Verlaufs, die von Null verschieden ist, soll in diesem Zusammenhang insbesondere eine quadratisch mit einem Abstand zu dem Punkt des Verlaufs anwachsende Abweichung gegenüber einer Geraden verstanden werden. Durch die erfindungsgemäße Ausgestaltung der Erfassungsvorrichtung kann vorteilhaft ein Perspektivwechsel einfach vollzogen werden.

Weiterhin wird vorgeschlagen, dass die Bewegungseinheit zumindest eine teilweise gekrümmte Bahn aufweist, und dazu vorgesehen ist, die zumindest eine Objektdatenerfassungseinheit entlang der zumindest teilweise gekrümmten Bahn zu führen. Bevorzugt weist die Bewegungseinheit zu einer Führung der Objektdatenerfassungseinheit als Führungseinheit eine gekrümmte Bahn auf, insbesondere eine gekrümmte Führungsschiene und/oder eine gekrümmte Führungsstange. Bevorzugt ist die Objektdatenerfassungseinheit auf einem Führungsschlitten montiert, der mittels der Antriebseinheit in zumindest einem Betriebszustand der Erfassungsvorrichtung entlang der gekrümmten Bahn bewegt wird. Unter einer "teilweise gekrümmten Bahn" soll insbesondere verstanden werden, dass ein Verlauf der Bahn in zumindest einem Teilbereich eine von null verschiedene Krümmung aufweist. Vorzugsweise soll darunter insbesondere verstanden werden, dass die Bahn einen Kreisbogen umfasst. Bevorzugt umfasst der Kreisbogen einen Mittelpunktswinkel von mehr als 90°. Besonders bevorzugt umfasst der Kreisbogen einen Mittelpunktswinkel von mehr als 180°. Es ist auch denkbar, dass die Bahn einen vollständigen Kreis beschreibt. Es ist auch denkbar, dass eine Krümmung der Bahn durch zumindest zwei gerade Bahnsegmente, die einen stumpfen oder spitzen Winkel einschließen, angenähert wird. Vorzugsweise sind die Bahnsegmente durch ein gekrümmtes Bahnsegment zu einer kontinuierlichen Bewegungsbahn der Objektdatenerfassungseinheit miteinander verbunden. Alternativ weist jedes, insbesondere gerade, Bahnsegment zumindest je eine eigene Objektdatenerfassungseinheit auf. Durch die erfindungsgemäße Ausgestaltung der Erfassungsvorrichtung kann vorteilhaft ein Perspektivwechsel einfach vollzogen werden.

Weiter wird vorgeschlagen, dass die Bewegungseinheit dazu vorgesehen ist, die zumindest eine Objektdatenerfassungseinheit entlang einer zumindest im Wesentlichen zu einer Bewegungsbahn senkrechten Richtung zu führen. Insbesondere kann die Bewegungseinheit eine überlagerte Bewegung der Objektdatenerfassungseinheit entlang der Bewegungsbahn und senkrecht zur Bewegungsbahn erzeugen. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Ebene betrachtet, welche sich parallel zu der Richtung und der Bezugsrichtung erstreckt, einen Winkel von 90° einschließen und der Winkel eine maximale Abweichung von insbesondere kleiner als 8°, vorteilhaft kleiner als 5° und besonders vorteilhaft kleiner als 2° aufweist. Insbesondere ist die Objektdatenerfassungseinheit entlang einer Geraden, die den Objekterfassungsbereich und die Objektdatenerfassungseinheit schneidet, beweglich gelagert. Durch die erfindungsgemäße Ausgestaltung der Erfassungsvorrichtung kann vorteilhaft ein Arbeitsabstand der Objektdatenerfassungseinheit, insbesondere ein Fokus, schnell und einfach eingestellt werden. Es kann insbesondere eine kostengünstige Objektdatenerfassungseinheit mit geringer Spanne des Arbeitsabstandes verwendet werden. Es ist auch denkbar, dass die Bewegungseinheit eine Schwenk- und oder Drehachse aufweist, um die die Führungseinheit der Objektdatenerfassungseinheit selbst schwenk- und/oder drehbar gelagert ist. Durch die erfindungsgemäße Ausgestaltung der Erfassungsvorrichtung können multiple Objektdatensätze vorteilhaft Objektdaten von allen Seiten des Objekts umfassen. Es ist auch denkbar, dass die Führungseinheit der Objektdatenerfassungseinheit translatorisch beweglich gelagert ist, um insbesondere ein Objekt zu erfassen, welches eine maximale Erstreckung aufweist, die größer ist als eine maximale Erstreckung der Führungseinheit.

Ferner wird vorgeschlagen, dass die Objektdatenerfassungseinheit zumindest eine Schwenk- und/oder Drehachse aufweist, um die die Objektdatenerfassungseinheit schwenk- und/oder drehbar gelagert ist. Insbesondere ist die Objektdatenerfassungseinheit um eine Gerade, die den Objekterfassungsbereich und die Objektdatenerfassungseinheit schneidet, schwenk- und/oder drehbar gelagert. Durch die erfindungsgemäße Ausgestaltung der Erfassungsvorrichtung kann ein Erfassungsbereich, insbesondere ein Bildformat, einer, insbesondere bildgebenden, Objektdatenerfassungseinheit vorteilhaft an das Objekt angepasst werden. Bevorzugt weist die Objektdatenerfassungseinheit eine Dreh- und/oder Schwenkachse auf, welche zur Bewegungsbahn der Objektdatenerfassungseinheit im Wesentlichen senkrecht ist. Bevorzugt ermöglicht die Dreh- und/oder Schwenkachse eine Ausrichtung einer zur Erfassung vorgesehenen Seite der Objektdatenerfassungseinheit, insbesondere während und/oder nach einer Bewegung entlang der Bewegungsbahn, im Wesentlichen senkrecht zu einer Geraden, die den Objekterfassungsbereich und die Objektdatenerfassungseinheit schneidet. Durch die erfindungsgemäße Ausgestaltung der Erfassungsvorrichtung kann ein Erfassungsbereich einer Objektdatenerfassungseinheit an ein Objekt angepasst werden. Objektdaten können mit einer Erfassung maximiert werden, während gleichzeitig Daten über einen Hintergrund minimiert werden.

Weiterhin wird vorgeschlagen, dass die Bewegungseinheit eine Antriebseinheit umfasst, die dazu vorgesehen ist, die Objektdatenerfassungseinheit automatisiert zu bewegen. Insbesondere soll unter "automatisiert" verstanden werden, dass die Antriebseinheit über eine, insbesondere zentrale, Recheneinheit gesteuert und/oder geregelt wird. Insbesondere steuert und/oder regelt die Recheneinheit die Antriebseinheit anhand einer Liste von, insbesondere zuvor bestimmten, Perspektiven, aus welchen das Objekt erfasst werden soll. In einer weiteren Ausgestaltung könnte die Recheneinheit einen Datensatz vorläufig auswerten, um die Liste dynamisch anzupassen. Vorteilhaft kann ein multipler Datensatz schnell erfasst werden.

Weiterhin wird vorgeschlagen, dass die Erfassungsvorrichtung zumindest eine, insbesondere die zuvor genannte, Objektträgereinheit umfasst. Die Objektträgereinheit ist insbesondere zu einer Positionierung des Objekts in einem Objektdatenerfassungsbereich der Erfassungsvorrichtung vorgesehen. Insbesondere umfasst die Objektträgereinheit zumindest einen Objektträger mit einer Objektträgerwandung auf, die dazu vorgesehen ist, eine Gewichtskraft eines Objekts aufzunehmen. Insbesondere ist in zumindest einem Betriebszustand der Erfassungsvorrichtung der Objektträger dazu vorgesehen, dass ein Objekt auf dem Objektträger, insbesondere auf der Objektträgerwandung, abgelegt wird. Vorzugsweise weist die Objektträgerwandung keine Vertiefungen und/oder Erhebungen auf. Alternativ kann die Objektträgerwandung eine Krümmung aufweisen, um die Wahrscheinlichkeit zu verringern, dass insbesondere ein rundes und/oder ein leichtes Objekt von dem Objektträger herunterfällt. Es ist auch denkbar, dass ein, insbesondere austauschbarer, Objektträger eine Arretiereinheit zu einer Fixierung eines Objekts auf dem Objektträger aufweist. Vorzugweise ist der Objektträger in zumindest einer Schnittebene kreisrund ausgebildet. Durch die erfindungsgemäße Ausgestaltung der Erfassungsvorrichtung kann ein Objekterfassungsbereich kenntlich gemacht werden. Insbesondere wird eine optimale Positionierung eines zu erfassenden Objekts im Objekterfassungsbereich erleichtert.

Ferner wird vorgeschlagen, dass die Bewegungsvorrichtung eine Lagereinheit aufweist, über die die Objektträgereinheit beweglich gelagert ist. Durch die erfindungsgemäße Ausgestaltung der Erfassungsvorrichtung kann eine definierte Relativbewegung zwischen Objekt und Objektdatenerfassungseinheit vorteilhaft vielfältig gestaltet werden.

Des Weiteren wird vorgeschlagen, dass die Lagereinheit zumindest eine Schwenk- und/oder Drehachse aufweist, um die die Objektträgereinheit schwenkund/oder drehbar gelagert ist. Bevorzugt weist die Objektträgereinheit eine vertikale Schwenk- und/oder Drehachse auf. Vorzugsweise fällt die Schwenkund/oder Drehachse mit einer Symmetrieachse der Objektträgereinheit zusammen. Durch die erfindungsgemäße Ausgestaltung der Erfassungsvorrichtung kann ein multipler Objektdatensatz Objektdaten von verschiedenen Seiten des Objekts umfassen.

Weiter wird vorgeschlagen, dass die Lagereinheit die Objektträgereinheit zumindest teilweise umgreift. Unter "teilweise umgreift" soll insbesondere verstanden werden, dass die Objektträgereinheit in einer Ausnehmung der Lagereinheit angeordnet ist. Bevorzugt soll unter "teilweise umgreift" verstanden werden, dass eine größte Seitenfläche eines kleinsten gedachten Quaders, welcher die Baueinheit gerade noch vollständig umschließt, in eine Ausnehmung der Lagereinheit hineinragt. Vorzugsweise soll darunter insbesondere verstanden werden, dass zumindest ein geometrischer Mittelpunkt der Objektträgereinheit in zumindest einer Ebene, in welcher der geometrische Mittelpunkt liegt, über einen Winkelbereich von zumindest 140°, vorzugsweise von zumindest 180° von der Lagereinheit umgeben ist. Bevorzugt ist die Objektträgereinheit an einer seitlichen Ausnehmung der Lagereinheit angeordnet. Alternativ ist die Lagereinheit an einer Unterseite, insbesondere einer dem Objekterfassungsbereich abgewandten Seite, der Objektträgereinheit angeordnet. Bevorzugt ist die Lagereinheit gegen die vertikale Dreh- und/oder Schwenkachse versetzt, so dass insbesondere eine Bewegungsbahn der Objektdatenerfassungseinheit unterhalb der Objektträgereinheit fortgesetzt werden kann. Durch die erfindungsgemäße Ausgestaltung der Erfassungsvorrichtung kann eine stabile Anordnung der Objektträgereinheit erreicht werden. Insbesondere kann eine von der Drehachse versetzte Anordnung der Lagereinheit erreicht werden.

Ferner wird vorgeschlagen, dass die Lagereinheit zumindest eine Bewegungsbahn aufweist, entlang der die Objektträgereinheit bewegbar gelagert ist. Bevorzugt ist die Bewegungsbahn parallel zu einer Geraden, die den Objekterfassungsbereich und die Objektdatenerfassungseinheit schneidet. Insbesondere verläuft die Bewegungsbahn vertikal. Bevorzugt ist die Objektträgereinheit mittels der Lagereinheit zumindest translatorisch entlang einer zumindest im Wesentlichen parallel, insbesondere koaxial, zur Dreh- und/oder Schwenkachse verlaufenden Linearachse bewegbar gelagert. Vorzugsweise umfasst die Lagereinheit zumindest eine Hubeinheit, mittels derer die Objektträgereinheit entlang der Bewegungsbahn bewegbar gelagert ist. Die Hubeinheit kann als Scherengelenk, als Linearlager, als Teleskoplager o. dgl. ausgebildet sein. Durch die erfindungsgemäße Ausgestaltung der Erfassungsvorrichtung kann vorteilhaft ein Arbeitsabstand, insbesondere ein Fokus, schnell und einfach eingestellt werden. Es kann insbesondere eine kostengünstige Objektdatenerfassungseinheit mit geringer Spanne des Arbeitsabstandes verwendet werden. Alternativ oder zusätzlich ist auch eine horizontale Bewegungsbahn denkbar, um ein Objekt zu erfassen, welches eine maximale Erstreckung aufweist, die größer ist als eine maximale Erstreckung der Objektträgereinheit.

Weiterhin wird vorgeschlagen, dass die Bewegungsvorrichtung eine Antriebseinheit umfasst, die dazu vorgesehen ist, die Objektträgereinheit automatisiert zu bewegen. Die Antriebseinheit kann zu einer Bewegung der Objektträgereinheit zumindest einen Aktor, insbesondere einen Linearaktor, wie beispielsweise einen elektrischen, hydraulischen oder pneumatischen Hubzylinder o. dgl., einen Elektromotor, einen Magnetantrieb o. dgl. aufweisen. Insbesondere soll unter "automatisiert" verstanden werden, dass die Antriebseinheit über eine, insbesondere zentrale, Recheneinheit gesteuert und/oder geregelt wird. Insbesondere steuert und/oder regelt die Recheneinheit die Antriebseinheit anhand einer Liste von, insbesondere zuvor bestimmten, Perspektiven, aus welchen das Objekt erfasst werden soll. In einer weiteren Ausgestaltung könnte die Recheneinheit einen Datensatz vorläufig auswerten, um die Liste dynamisch anzupassen. Vorzugsweise ist die Antriebseinheit dazu vorgesehen, die Objektträgereinheit und die Objektdatenerfassungseinheit gegenläufig zueinander zu bewegen, insbesondere um die Schwenk- und/oder Drehachse der Lagereinheit gegenläufig zu bewegen, insbesondere in zumindest einem Betriebszustand der Erfassungsvorrichtung. Es ist auch denkbar, dass die Antriebseinheit in zumindest einem weiteren Betriebszustand der Erfassungsvorrichtung dazu vorgesehen ist, die Objektträgereinheit und die Objektdatenerfassungseinheit in eine gleiche Bewegungsrichtung relativ zueinander zu bewegen, insbesondere in eine gleiche Bewegungsrichtung um die Schwenk- und/oder Drehachse der Lagereinheit zu bewegen, insbesondere mit unterschiedlichen Geschwindigkeiten. Ferner ist auch denkbar, dass die Antriebseinheit in zumindest einem zusätzlichen Betriebszustand der Erfassungsvorrichtung dazu vorgesehen ist, die Objektträgereinheit in einer Fixposition zu halten und lediglich die Objektdatenerfassungseinheit relativ zur Objektträgereinheit zu bewegen, insbesondere um die Schwenk- und/oder Drehachse der Lagereinheit zu bewegen. Vorzugsweise umfasst die Antriebseinheit zumindest einen Aktor, der der Objektträgereinheit zugeordnet ist und einen weiteren Aktor, der der Objektdatenerfassungseinheit zugeordnet ist. Es ist jedoch auch denkbar, dass die Antriebseinheit einen einzelnen Aktor aufweist, der über eine Getriebeeinheit zu einer Bewegung der Objektträgereinheit und zu einer Bewegung der Objektdatenerfassungseinheit vorgesehen ist. Ferner ist auch denkbar, dass die Antriebseinheit als Magnetantriebseinheit ausgebildet ist und dazu vorgesehen ist, die Objektträgereinheit und die Objektdatenerfassungseinheit gegenläufig zueinander zu bewegen, insbesondere um eine Schwenkund/oder Drehachse der Lagereinheit gegenläufig zu bewegen. Vorzugsweise ist die Antriebseinheit dazu vorgesehen, die Objektträgereinheit und die Objektdatenerfassungseinheit entlang entgegengesetzter Hauptbewegungsrichtungen zu bewegen. Bevorzugt ist die Antriebseinheit dazu vorgesehen, die Objektdatenerfassungseinheit entlang einer Richtung um die Objektträgereinheit zu bewegen und die Objektträgereinheit in einer entgegengesetzten Richtung relativ zur Objektdatenerfassungseinheit um die Schwenk- und/oder Drehachse der Lagereinheit zu bewegen. Mittels der erfindungsgemäßen Ausgestaltung kann vorteilhaft eine Vielzahl an verschiedenen Aufnahmen eines Objekts aus unterschiedlichen Erfassungswinkeln in einer kurzen Zeitspanne erfasst werden, um vorteilhaft einen multiplen Datensatz für das Objekt zu erfassen. Vorteilhaft kann ein multipler Datensatz schnell erfasst werden.

Ferner wird vorgeschlagen, dass die Objektträgereinheit zumindest einen Objektträger aufweist, der eine in zumindest einem Betriebszustand transparente Objektträgerwandung aufweist. Unter "transparent" soll insbesondere verstanden werden, dass ein Transmissionsgrad der Objektträgerwandung, insbesondere bei einer mittleren Wellenlänge des mit der Objektdatenerfassungseinheit erfassbaren Spektrums, zumindest größer als 80%, vorzugsweise größer als 90% und besonders bevorzugt größer als 95% ist. Vorzugsweise ist der Objektträger aus einem transparenten Material gefertigt, beispielsweise Glas oder ein Polycarbonat. Vorteilhaft kann eine der Objektträgerwandung zugewandte Seite des Objekts durch eine Position der Objektdatenerfassungseinheit auf einer dem Objekt gegenüberliegenden Seite des Objektträgers erfasst werden.

Des Weiteren wird vorgeschlagen, dass die Objektträgereinheit eine Einstelleinheit aufweist, mittels derer ein Reflexionsgrad, ein Absorptionsgrad und/oder Transmissionsgrad einstellbar ist. Bevorzugt weist der Objektträger auf der Objektträgerwandung eine Schicht aus einem Material auf, welches seine optischen Eigenschaften durch das Anlegen einer elektrischen Spannung ändert. Insbesondere weist der Objektträger auf der Objektträgerwandung eine Schicht aus elektrochromem Glas oder Flüssigkristallglas auf. Bevorzugt ist die Einstelleinheit dazu vorgesehen die Schicht mit einer einstellbaren Spannung zu versorgen. Durch die erfindungsgemäße Ausgestaltung der Erfassungsvorrichtung kann vorteilhaft einfach zwischen einem transparenten Hintergrund und einem undurchsichtigen Hintergrund gewechselt werden.

Weiter wird vorgeschlagen, dass die Objektträgereinheit zur aktiven Beleuchtung vorgesehen ist. Unter einer "aktiven Beleuchtung" soll insbesondere verstanden werden, dass die Objektträgereinheit selbst eine Beleuchtungseinheit umfasst und/oder dass eine Beleuchtungseinheit, von der Objektdatenerfassungseinheit aus gesehen, hinter der Objektträgereinheit angeordnet ist und diese zumindest teilweise durchstrahlt. Bevorzugt weist der Objektträger zumindest eine Schicht auf, welche das von der Beleuchtungseinheit ausgehende Licht diffus streut, beispielsweise eine Schicht aus opakem Weißglas. Vorzugsweise kann die Beleuchtungseinheit Licht in verschiedenen Farben aussenden. Vorzugsweise weist die Beleuchtungseinheit zumindest zwei Beleuchtungselemente auf, die separat ansteuerbar sind. In einer weiterführenden Ausgestaltung kann die Beleuchtungseinheit über eine Vielzahl an separat ansteuerbaren Beleuchtungselementen verfügen, die auf einer Fläche verteilt sind, welche den Objekterfassungsbereich zumindest teilweise einschließt. Durch die erfindungsgemäße Ausgestaltung der Erfassungsvorrichtung kann vorteilhaft eine Beleuchtung des Objekts angepasst werden. Insbesondere kann durch eine Farbanpassung ein Kontrast der Objektträgereinheit gegenüber einem auf ihr ruhenden Objekt maximiert werden.

Ferner wird vorgeschlagen, dass die Objektträgereinheit zumindest eine Lichtquelle aufweist. Bevorzugt ist eine Lichtquelle an der Objektträgerwandung gegenüberliegenden Seite angeordnet. Es ist auch denkbar, dass eine Lichtquelle in den Objektträger eingelassen ist. Weiterhin wird vorgeschlagen, dass die Objektträgereinheit zumindest eine Leuchtdiode, insbesondere zumindest eine organische Leuchtdiode, aufweist. Insbesondere ist die zumindest eine Leuchtdiode dazu vorgesehen, die Objektträgereinheit gleichmäßig leuchten zu lassen, insbesondere in verschiedenen einstellbaren Farben. Durch die erfindungsgemäße Ausgestaltung der Erfassungsvorrichtung kann vorteilhaft eine Beleuchtung des Objekts angepasst werden. Insbesondere kann durch eine Farbanpassung ein Kontrast der Objektträgereinheit gegenüber einem auf ihr ruhenden Objekt maximiert werden.

Weiter wird vorgeschlagen, dass die Objektträgereinheit zumindest zwei lösbar verbundenen Objektträger zu transportieren. Unter "lösbar" soll in diesem Zusammenhang insbesondere "zerstörungsfrei trennbar" verstanden werden. Bevorzugt weist die Objektträgereinheit ein zu dem Objektträger komplementäres Gegenstück auf. Insbesondere ist der Objektträger und das komplementäre Gegenstück in zumindest einem Betriebszustand der Erfassungsvorrichtung formund/oder kraftschlüssig verbunden. Beispielsweise können der Objektträger und das komplementäre Gegenstück über eine Führungsschiene, eine Rastverbindung, eine Magneteinheit und/oder eine andere dem Fachmann als sinnvoll erscheinende Verbindung temporär verbunden werden. Es ist auch denkbar, dass die Objektträgereinheit als Ganzes lösbar mit der Lagereinheit verbunden ist. Durch die erfindungsgemäße Ausgestaltung der Erfassungsvorrichtung kann vorteilhaft schnell und einfach eine Objektträgereinheit mit einem Objekt beladen werden.

Weiter wird eine Transporteinheit vorgeschlagen, die dazu vorgesehen ist Objekte zumindest teilautomatisiert einem Objekterfassungsbereich zuzuführen. Unter "teilautomatisiert zuzuführen" soll insbesondere verstanden werden, dass ein Objekt zumindest von einem Startpunkt der Transporteinheit bis in den Objekterfassungsbereich bedienungsfrei transportiert wird. Bevorzugt ist ein Transport aus dem Objekterfassungsbereich bis zu einem Endpunkt der Transporteinheit bedienungsfrei. Ein Startpunkt ist insbesondere eine Beladezone der Transporteinheit. Ein Endpunkt ist insbesondere eine Entladezone der Transporteinheit. Bevorzugt findet ein Austausch eines Objekts in dem Objekterfassungsbereich automatisch statt. Insbesondere wird die Transporteinheit durch die, insbesondere zentrale, Recheneinheit gesteuert. Durch die erfindungsgemäße Ausgestaltung der Erfassungsvorrichtung können vorteilhaft schnell multiple Objektdatensätze von mehreren Objekten erfasst werden.

Ferner wird vorgeschlagen, dass die Transporteinheit eine Bahnfördereinheit, insbesondere eine Förderbandeinheit, umfasst. Es sind auch andere Ausgestaltungen der Bahnfördereinheit denkbar, beispielsweise als Rollenförderer. Alternativ kann die Transporteinheit als autonome Flurfördereinheit oder als Roboterarm ausgebildet sein. Durch die erfindungsgemäße Ausgestaltung der Erfassungsvorrichtung kann vorteilhaft schnell eine große Anzahl an Objekten dem Objekterfassungsbereich zugeführt werden.

Des Weiteren wird vorgeschlagen, dass die Transporteinheit eine Positionierungseinheit umfasst, zu einer Positionierung eines Objektes, insbesondere von der Bahnfördereinheit herunter, in einem Objekterfassungsbereich. Insbesondere ist die Positionierungseinheit als Schublade, Greifarm und/oder Magnetarm ausgebildet. Insbesondere ist die Positionierungseinheit dazu vorgesehen, einen Objektträger mit einem darauf befindlichen Objekt, insbesondere von der Bahnfördereinheit herunter, in den Objekterfassungsbereich zu positionieren. Insbesondere ist die Positionierungseinheit dazu vorgesehen, den Objektträger dem komplementären Gegenstück der Objektträgereinheit und/oder der Lagereinheit zuzuführen. Durch die erfindungsgemäße Ausgestaltung der Erfassungsvorrichtung kann vorteilhaft zuverlässig eine Positionierung eines automatisch transportierten Objekts in den Objekterfassungsbereich erreicht werden.

Darüber hinaus wird vorgeschlagen, dass die Transporteinheit zumindest zwei Objektträger aufweist. Bevorzugt weist die Transporteinheit zumindest zehn Objektträger auf. Durch die erfindungsgemäße Ausgestaltung der Erfassungsvorrichtung kann vorteilhaft eine Totzeit der Erfassungsvorrichtung aufgrund einer Be- und Entladezeit der Transporteinheit vorteilhaft minimiert werden.

Weiter wird eine Gehäuseeinheit vorgeschlagen, die dazu vorgesehen ist, einen Objekterfassungsbereich zumindest teilweise nach außen abzuschirmen. Bevorzugt sind die Objektdatenerfassungseinheit und die Bewegungsvorrichtung zumindest teilweise in einem durch die Gehäuseeinheit definierten Innenraum angeordnet. Die Gehäuseeinheit ist insbesondere dazu vorgesehen, den Innenraum gegen Staub abzuschirmen. Bevorzugt schirmt die Gehäuseeinheit den Innenraum vor elektromagnetischer Strahlung ab. Bevorzugt umfasst die Gehäuseeinheit eine, insbesondere eine einzige, Öffnung für eine Positionierung eins Objekts in dem Objekterfassungsbereich. Bevorzugt umfasst die Gehäuseeinheit eine Verschlusseinheit zu einem, insbesondere automatischen, Schließen und Öffnen der Öffnung. Alternativ weist das Gehäuse zwei Öffnungen zur Anordnung einer Bahnfördereinheit durch das Gehäuse hindurch auf. Vorzugsweise weist das Gehäuse ein Sichtfenster auf den Objekterfassungsbereich auf. Bevorzugt weist das Gehäuse eine Anzeigeeinheit, insbesondere ein Display, auf. Die Anzeigeeinheit ist insbesondere dazu vorgesehen, zumindest ein Element eines multiplen Objektdatensatzes zu einer Kontrolle darzustellen. Durch die erfindungsgemäße Ausgestaltung der Erfassungsvorrichtung kann die Erfassungseinrichtung in einer staubbelasteten Umgebung betrieben werden, insbesondere in Fabrik- und/oder Lagerhallen.

Ferner wird eine Antischmutzeinheit vorgeschlagen, die dazu vorgesehen ist, eine Verschmutzung eines Objekterfassungsbereichs und/oder eines Bereichs einer Objektdatenerfassungseinheit, insbesondere innerhalb der Gehäuseeinheit, zumindest zu reduzieren. Unter einer "Antischmutzeinheit" soll insbesondere eine Einheit verstanden werden, die die Anzahl von Partikeln, insbesondere Staub, in einem begrenzten Bereich zumindest reduziert und/oder von einem Eindringen in den Bereich abhält. Die Antischmutzeinheit kann beispielsweise ein Gebläse umfassen, das einen konstanten Luftstrom aus dem zu schützenden Bereich heraus erzeugt. Bevorzugt wälzt ein Gebläse eine sich im Arbeitsbereich des Gebläses befindliche Luft um, um einen Luftstrom zu erzeugen. Es ist jedoch auch denkbar, dass das Gebläse ein, insbesondere reines, Gas, beispielsweise Stickstoff, aus eine Vorratseinheit aussendet. Alternativ oder zusätzlich kann die Antischmutzeinheit eine elektrostatische Einheit, insbesondere einen Ionisator, umfassen, um eine Haftung von Partikeln an einer Oberfläche zu reduzieren. Durch die erfindungsgemäße Ausgestaltung der Erfassungsvorrichtung kann die Erfassungseinrichtung in einer staubbelasteten Umgebung betrieben werden, insbesondere in Fabrik- und/oder Lagerhallen.

Des Weiteren wird vorgeschlagen, dass die Antischmutzeinheit dazu vorgesehen ist, innerhalb der Gehäuseeinheit einen Überdruck zu erzeugen. Bevorzugt wird ein Überdruck durch ein Umwälzen von gefilterter Luft aus der Umgebung der Gehäuseeinheit erreicht. Alternativ wird ein, insbesondere reines, Gas aus einer Vorratseinheit in die Gehäuseeinheit eingelassen. Durch die erfindungsgemäße Ausgestaltung der Erfassungsvorrichtung kann ein Gasstrom aus der Gehäuseeinheit hinaus erreicht werden.

Ferner wird eine Aufbereitungseinheit vorgeschlagen, die dazu vorgesehen ist, zumindest ein Objekt vor einer Objektdatensatzerfassung aufzubereiten, insbesondere zu reinigen.

Des Weiteren wird vorgeschlagen, dass die Aufbereitungseinheit eine Schleuseneinheit aufweist. Unter einer Schleuseneinheit soll insbesondere eine von dem Objekterfassungsbereich abgegrenzte Unterstruktur der Gehäuseeinheit verstanden werden, welche ein Objekt zu einer Positionierung im Objekterfassungsbereich passieren muss. Bevorzugt weist die Unterstruktur an einem Übergang zum Objekterfassungsbereich eine Abgrenzungseinheit auf. Die Abgrenzungseinheit kann beispielsweise eine automatisch gesteuerte Schiebetür umfassen oder einen Vorhang aus elastischen angeordneten Kunststofflamellen. Vorzugsweise weist die Schleuseneinheit eine weitere Abgrenzungseinheit an einer Außenseite der Unterstruktur auf, welche dafür vorgesehen ist, ein Objekt in die Schleuseneinheit hinein zu bringen und/oder hinaus zu nehmen. Durch die erfindungsgemäße Ausgestaltung der Erfassungsvorrichtung kann zumindest in einem regulären Betriebszustand der Erfassungsvorrichtung eine direkte Verbindung des Objekterfassungsbereichs mit der die Gehäuseeinheit umgebenden Luft vermieden werden.

Weiter wird vorgeschlagen, dass die Aufbereitungseinheit eine Fluidkontrolleinheit zu einer Steuerung und/oder Regelung eines Fluidstroms aufweist. Insbesondere kann eine Fluidkontrolleinheit ein Gebläse, eine Gasdüse und/oder ein Flüssigkeitsdüse umfassen. Insbesondere ist die Fluidkontrolleinheit an einer Außenwand der Gehäuseeinheit angebracht. Bevorzugt ist die Fluidkontrolleinheit um die Öffnung der Gehäuseeinheit herum angeordnet. Bevorzugt erzeugt die Fluidkontrolleinheit einen Fluidstrom, der von der Öffnung weggerichtet ist. Vorzugweise ist in der Schleuseneinheit eine Fluidkontrolleinheit angeordnet. Durch die erfindungsgemäße Ausgestaltung der Erfassungsvorrichtung kann eine Verschmutzung eines in die Gehäuseeinheit hineinbewegten Objekts reduziert werden.

Weiterhin wird vorgeschlagen, dass die Erfassungsvorrichtung zumindest eine Kontrasteinheit umfasst, die zu einer aktiven Beleuchtung vorgesehen ist, insbesondere zu einer Beleuchtung mittels einer Beleuchtungseinheit der Erfassungsvorrichtung. Unter einer Kontrasteinheit soll insbesondere eine Einheit verstanden werden, welche von der Objektdatenerfassungseinheit aus gesehen, hinter dem Objekterfassungsbereich angeordnet ist und einen einheitlichen Hintergrund bei einer Erfassung des Objekts bereitstellt. Die Kontrasteinheit kann eine Krümmung aufweisen oder eben ausgebildet sein. Bevorzugt ist die Kontrasteinheit in zumindest einem Betriebszustand der Erfassungsvorrichtung direkt an der Objektträgereinheit angeordnet. Es ist jedoch auch denkbar, dass die Kontrasteinheit relativ zur Objektträgereinheit beweglich gelagert ist, insbesondere zusammen mit der Objektdatenerfassungseinheit oder relativ zur Objektträgereinheit und relativ zur Objektdatenerfassungseinheit beweglich gelagert ist. Unter einer "aktiven Beleuchtung" soll insbesondere verstanden werden, dass die Kontrasteinheit selbst eine Beleuchtungseinheit umfasst und/oder dass eine Beleuchtungseinheit der Erfassungsvorrichtung, von der Objektdatenerfassungseinheit aus gesehen, hinter der Kontrasteinheit angeordnet ist und diese zumindest teilweise durchstrahlt. Bevorzugt weist die Kontrasteinheit zumindest eine Schicht auf, welche das von der Beleuchtungseinheit ausgehende Licht diffus streut. Vorzugsweise kann die Beleuchtungseinheit Licht in verschiedenen Farben aussenden. Vorzugsweise weist die Beleuchtungseinheit zumindest zwei Beleuchtungselemente auf, die separat ansteuerbar sind. Bevorzugt kann die Beleuchtungseinheit kontinuierliches Licht und/oder Blitzlicht erzeugen. Alternativ ist eine Beleuchtungseinheit von der Kontrasteinheit aus gesehen der Objektträgereinheit gegenüberliegend angeordnet, insbesondere an der Führungseinheit für die Objektdatenerfassungseinheit. In einer weiteren Ausgestaltung der Erfindung könnte der Objekterfassungsbereich von einer Beleuchtungseinheit der Erfassungsvorrichtung im Wesentlichen vollständig umgeben sein. Unter "im Wesentlichen vollständig umgeben" soll insbesondere verstanden werden, dass bei einer Anordnung der Beleuchtungseinheit auf einer Oberfläche eines gedachten dreidimensionalen Körpers, der zumindest den Objekterfassungsbereich vollständig umschließt, die Beleuchtungseinheit zumindest 50%, vorzugsweise mehr als 75% der Oberfläche bedeckt. Insbesondere könnten auch einzelne, insbesondere voneinander beabstandete, einzeln ansteuerbare Beleuchtungselemente auf einer Oberfläche eines gedachten dreidimensionalen Körpers, der zumindest den Objekterfassungsbereich vollständig umschließt, in einem unregelmäßigen oder regelmäßigen, insbesondere rasterförmigen, Muster angeordnet sein. Bevorzugt ist eine Teilfläche der Oberfläche, die sich durch eine Projektion einer Kreisfläche auf die Oberfläche ergibt und auf der kein Beleuchtungselement angeordnet ist, zumindest kleiner als 50%, bevorzugt kleiner als 25%. Vorzugsweise ist die Beleuchtungseinheit der Erfassungsvorrichtung derart ausgebildet, dass ein auf der Objektträgereinheit angeordnetes Objekt von allen Seiten beleuchtet wird, insbesondere um das Objekt homogen auszuleuchten. Alternativ oder zusätzlich ist denkbar, dass die Beleuchtungseinheit dazu vorgesehen ist, ein an der Objektträgereinheit angeordnetes Objekt indirekt oder punktuell zu beleuchten. Alternativ oder zusätzlich ist die Beleuchtungseinheit dazu vorgesehen, ein an der Objektträgereinheit angeordnetes Objekt infolge einer farblichen Beleuchtung freizustellen. Beispielsweise ist denkbar, dass durch einen vorgelagerten Color Recognition Prozess ein hinter dem Objekt angeordneter Hintergrund zur Freistellung mittels der Beleuchtungseinheit, insbesondere auf blau, grün oder eine andere Farbe gestellt. Bevorzugt erfolgt der Color Recognition Prozess durch ein Kamerasystem, insbesondere durch die Objektdatenerfassungseinheit oder eine mobile Erfassungseinheit, wobei insbesondere ein Farbanteil in einem Objekt errechnet wird und mit einer Abmessung des Objekts abgeglichen wird, um eine geeignete Farbauswahl zu einer Freistellung des Objekts zu ermöglichen. Vorzugsweise umfasst die Beleuchtungseinheit der Erfassungsvorrichtung eine Draufsichtbeleuchtungseinheit und eine Frontbeleuchtungseinheit. Vorzugsweise ist die Draufsichtbeleuchtungseinheit dazu vorgesehen, ein an der Objektträgereinheit angeordnetes Objekt von oben zu beleuchten. Vorzugsweise ist die Frontbeleuchtungseinheit dazu vorgesehen, ein an der Objektträgereinheit angeordnetes Objekt von vorne, insbesondere entlang seines Umfangs, zu beleuchten. Bevorzugt umfasst die Draufsichtbeleuchtungseinheit und/oder die Frontbeleuchtungseinheit zumindest ein Beleuchtungspanel, insbesondere eine Vielzahl an Beleuchtungspanelen. Vorzugsweise umfasst die Draufsichtbeleuchtungseinheit und/oder die Frontbeleuchtungseinheit zumindest ein individuell beweglich gelagertes Beleuchtungspanel, insbesondere eine Vielzahl an individuell beweglich gelagerten Beleuchtungspanelen, insbesondere um eine Einstellung eines Leuchtwinkels der Beleuchtungseinheit relativ zur Objektträgereinheit zu ermöglichen. Vorzugsweise sind die Beleuchtungspanelen der Draufsichtbeleuchtungseinheit und/oder der Frontbeleuchtungseinheit kaskadiert, insbesondere hintereinandergeschalten und/oder verkettet. Bevorzugt werden/wird die Draufsichtbeleuchtungseinheit und/oder die Frontbeleuchtungseinheit mittels der, insbesondere zentralen, Recheneinheit der Erfassungsvorrichtung oder eines die Erfassungsvorrichtung umfassenden Systems gesteuert und/oder geregelt. Es ist jedoch auch denkbar, dass die Draufsichtbeleuchtungseinheit und/oder die Frontbeleuchtungseinheit eine eigene Recheneinheit, insbesondere einen DMX Controller, zu einer individuellen Steuerung und/oder Regelung des/der Beleuchtungspanels/en umfassen/umfasst. Vorzugsweise weist die Beleuchtungseinheit, insbesondere weisen die Draufsichtbeleuchtungseinheit und/oder die Frontbeleuchtungseinheit, zumindest einen, insbesondere passiven, Kühlkörper auf. Bevorzugt ist der Kühlkörper einteilig mit einem Träger der Beleuchtungspanelen ausgebildet, insbesondere als Aluminiumstrangpressprofil, ausgebildet. Andere Ausgestaltungen des Kühlkörpers sind ebenfalls denkbar, wie beispielsweise eine Ausgestaltung des Kühlkörpers als aktiver Kühlkörper, insbesondere als Fluidkühlkörper (Lüfter, Wasserkühlkörper, etc.) o. dgl. Vorzugsweise ist an dem Träger zumindest eine Leiterplatte aus FR4 oder eine Leiterplatte mit einem Aluminiumkern der Beleuchtungseinheit, insbesondere der Draufsichtbeleuchtungseinheit und/oder der Frontbeleuchtungseinheit angeordnet, insbesondere zu einer Ansteuerung und/oder Aufnahme von einzelnen Beleuchtungselementen der Beleuchtungseinheit. Vorzugsweise ist die Leiterplatte mittels einer kraft-, formund/oder stoffschlüssigen Verbindung an dem Träger fixiert, wie beispielsweise mittels einer Klebung mit QPad^{®} Gap Filler II, mittels einer Schraubverbindung o. dgl. Bevorzugt weist die Leiterplatte eine Decklackschicht auf, die einem hellen Farbton, insbesondere weiß, entspricht. Bevorzugt weist die Leiterplatte zumindest eine Kupferleiterbahn auf, die einen Querschnitt von mindestens 70 µm aufweist.

Vorzugsweise weist die Beleuchtungseinheit als LED ausgebildete Beleuchtungselemente auf, insbesondere LED Chips des Herstellers Nichia sowie Seoul. Es ist jedoch auch denkbar, dass die Beleuchtungselemente eine andere, einem Fachmann als sinnvoll erscheinende Ausgestaltung aufweisen. Bevorzugt bilden eine RGB-LED, wie beispielsweise ein Nichia RGB Chip NSSM124DT, und eine weiße LED, wie beispielsweise ein Seoul Sunlike Chip STW9C2PB-SC, zusammen ein Beleuchtungselement der Beleuchtungseinheit, die insbesondere zusammen auf einer gemeinsamen Leiterplatte angeordnet sind. Vorzugsweise weist das Beleuchtungselement eine Farbtemperatur von 5000 K und einen Farbwiedergabeindex von mindestens 95 auf. Vorzugsweise sind die Beleuchtungselemente oder die Beleuchtungspanelen derart gleichmäßig angeordnet, dass ein geringer Wärmewiederstand realisierbar ist und/oder eine hohe Wärmespreizung erreichbar ist. Bevorzugt umfasst die Beleuchtungseinheit zumindest ein optisches Diffusorelement. Vorzugsweise ist das optische Diffusorelement an der Leiterplatte angeordnet, insbesondere an dem Beleuchtungselement. Vorzugsweise weist das optische Diffusorelement einen maximalen Abstand von weniger als 50 mm, insbesondere von weniger als 30 mm, besonders bevorzugt von weniger als 20 mm und besonders bevorzugt von weniger als 15 mm relativ zu einer Oberfläche der Leiterplatte oder des Beleuchtungspanels auf, insbesondere um eine vorteilhafte Streuung des Lichts aus den Beleuchtungspanelen zu erreichen und/oder um Hotspots und Spiegelungen zumindest weitestgehend zu vermeiden.

Die Beleuchtungseinheit umfasst vorzugsweise, insbesondere zusätzlich, eine Hintergrundbeleuchtungseinheit, die bevorzugt zumindest ein Beleuchtungspanel, insbesondere eine Vielzahl an Beleuchtungspanelen, aufweist, das/die insbesondere analog zu dem/den Beleuchtungspanel/en der Draufsichtbeleuchtungseinheit und/oder der Frontbeleuchtungseinheit ausgebildet ist/sind. Vorzugsweise sind das/die Beleuchtungspanel/en der Hintergrundbeleuchtungseinheit in einem leichten Halbkreis mit einer großen Diffusor-Scheibe angeordnet. Bevorzugt ist die Hintergrundbeleuchtungseinheit mittels der, insbesondere zentralen, Recheneinheit der Erfassungsvorrichtung oder eines die Erfassungsvorrichtung umfassenden Systems individuell steuerbar und/oder regelbar. Es ist jedoch auch denkbar, dass die Hintergrundbeleuchtungseinheit eine eigene Recheneinheit, insbesondere einen DMX Controller, zu einer individuellen Steuerung und/oder Regelung des/der Beleuchtungspanels/en umfasst.

Vorzugsweise umfasst die Beleuchtungseinheit zumindest eine Untergrundbeleuchtungseinheit, die in die Objektträgereinheit integriert ist. Vorzugsweise ist die Untergrundbeleuchtungseinheit dazu vorgesehen, die Objektträgereinheit zu durchleuchten, insbesondere um ein an der Objektträgereinheit angeordnetes Objekt von unten zu beleuchten. Bevorzugt ist die Untergrundbeleuchtungseinheit mittels der, insbesondere zentralen, Recheneinheit der Erfassungsvorrichtung oder eines die Erfassungsvorrichtung umfassenden Systems individuell steuerbar und/oder regelbar. Es ist jedoch auch denkbar, dass die Untergrundbeleuchtungseinheit eine eigene Recheneinheit, insbesondere einen DMX Controller, zu einer individuellen Steuerung und/oder Regelung des/der Beleuchtungspanels/en umfasst. Vorzugsweise umfasst die Untergrundbeleuchtungseinheit Beleuchtungselemente oder Beleuchtungspanelen, die analog zu den Beleuchtungselementen oder den Beleuchtungspanelen der die Draufsichtbeleuchtungseinheit und/oder die Frontbeleuchtungseinheit ausgebildet sind. Vorzugsweise sind die Beleuchtungselemente als Gruppen, insbesondere mit zumindest fünf Beleuchtungselementen in einer Gruppe, gleichmäßig verteilt an der Objektträgereinheit angeordnet. Vorzugsweise erfolgt eine Wärmeabführung der Untergrundbeleuchtungseinheit über die, insbesondere als Alu-Tisch ausgebildete, Objektträgereinheit und/oder Gap-Filler, insbesondere aktivlüfterfrei. Die Objektträgereinheit weist vorzugsweise einen mehrschichtigen Aufbau auf. Bevorzugt umfasst die Objektträgereinheit zumindest eine Streuabdeckung und zumindest eine Objektauflage, die insbesondere die Haupterstreckungsfläche umfasst. Die Streuabdeckung und zumindest eine Objektauflage sind bevorzugt aus einem transluzenten Werkstoff ausgebildet, insbesondere aus einem Platten-Acrylharz-Verbund, wie beispielsweise Opal S302 Hi Macs^{®}. Vorzugsweise ist eine Oberfläche des transluzenten Werkstoffs angeschliffen ausgebildet. Die Streuabdeckung und die zumindest eine Objektauflage bilden zusammen eine maximale Plattenstärke der Objektträgereinheit von mindestens 12 mm. Vorzugsweise weist die Haupterstreckungsfläche der Objektträgereinheit einen maximalen Abstand relativ zur Untergrundbeleuchtungseinheit auf, der kleiner ist als 50 mm, insbesondere kleiner ist als 40 mm und besonders bevorzugt kleiner ist als 30 mm, insbesondere in einem montierten Zustand der Objektträgereinheit und der Untergrundbeleuchtungseinheit. Vorzugsweise erfolgt eine Spannungsversorgung der Beleuchtungseinheit über, insbesondere sechs, Netzteile, wie beispielsweise Netzteile HEP600-20, 20V/28A der Firma Mean Well, die insbesondere einzeln auf ein sechs Kanal DMX Controller, wie beispielsweise ein sechs Kanal DMX Controller 6CV10A-TS, aufgeteilt werden. Es ist jedoch auch denkbar, dass eine Spannungsversorgung der Beleuchtungseinheit auf eine andere, einem Fachmann als sinnvoll erscheinende Weise erfolgt. Bevorzugt ist der DMX Controller dazu vorgesehen, das Beleuchtungselement mit einer Wiederholrate von größer als 70 Hz anzusteuern, insbesondere um eine flackerfreie Lichtausgabe des Beleuchtungselements zu realisieren. Bevorzugt ist die Beleuchtungseinheit mittels des DMX Controllers oder der Recheneinheit in Abhängigkeit von einer Ausgestaltung einer Objektdatenerfassungseinheit automatisch an Kenngrößen der Objektdatenerfassungseinheit anpassbar, insbesondere um eine Einstellung von beispielsweise einer Wiederholrate der Beleuchtungseinheit an eine Wiederholrate der Objektdatenerfassungseinheit anzupassen, um bevorzugt einen Bildfehler, wie beispielsweise ein Flimmern oder Flackern, bei einer Aufnahme zumindest weitestgehend zu vermeiden.

Vorzugsweise ist der DMX Controller auf eine Strombegrenzung von maximal 10 A eingestellt. Bevorzugt wird der DMX Controller einzeln an jedes am DMX Controller angeschlossene Beleuchtungspanel der Beleuchtungseinheit individuell eingestellt und abgestimmt, wobei vorzugsweise eine individuelle Adressierung im C-Bus System hinterlegt wird. Vorzugsweise entsprechen alle elektronischen Bauteile der Erfassungsvorrichtung der DIN EN 61347-2-13 - 2017-10. Insbesondere ist die Beleuchtungseinheit gemäß der photobiologischen Sicherheit nach EN 62471 geprüft. Durch die erfindungsgemäße Ausgestaltung der Erfassungsvorrichtung kann vorteilhaft eine Beleuchtung des Objekts angepasst werden. Insbesondere kann durch eine Farbanpassung ein Kontrast der Kontrasteinheit gegenüber einem auf der Objektträgereinheit ruhendem Objekt maximiert werden.

Ferner wird vorgeschlagen, dass die Erfassungsvorrichtung zumindest eine, insbesondere die zuvor genannte, Kontrasteinheit umfasst, welche zumindest eine Lichtquelle, insbesondere die Hintergrundbeleuchtungseinheit, aufweist. Bevorzugt ist eine Lichtquelle an der der Objektträgereinheit abgewandten Seite der Kontrasteinheit angebracht. Es ist auch denkbar, dass eine Lichtquelle in die Kontrasteinheit eingelassen ist. Des Weiteren wird eine Kontrasteinheit vorgeschlagen, welche zumindest eine Leuchtdiode, insbesondere zumindest eine organische Leuchtdiode, aufweist. Insbesondere ist die zumindest eine Leuchtdiode, dazu vorgesehen, die Kontrasteinheit gleichmäßig leuchten zu lassen, insbesondere in verschiedenen einstellbaren Farben. Durch die erfindungsgemäße Ausgestaltung der Erfassungsvorrichtung kann vorteilhaft eine Beleuchtung des Objekts angepasst werden. Insbesondere kann durch eine Farbanpassung ein Kontrast der Kontrasteinheit gegenüber einem auf der Objektträgereinheit ruhenden Objekt maximiert werden.

Ferner wird vorgeschlagen, dass die Erfassungsvorrichtung zumindest eine, insbesondere die zuvor genannte, Kontrasteinheit umfasst, wobei die Bewegungsvorrichtung eine Antriebseinheit zu einer automatisierten Bewegung der Kontrasteinheit umfasst. Insbesondere ist die Antriebseinheit dazu vorgesehen, die Kontrasteinheit auf einer Bewegungsbahn um den Objekterfassungsbereich herum zu bewegen. Bevorzugt ist die Bewegungsbahn der Kontrasteinheit stetig mit der Bewegungsbahn der Objektdatenerfassungseinheit verbunden. Alternativ verläuft die Bewegungsbahn der Kontrasteinheit zumindest abschnittsweise im Wesentlichen parallel zu einer Bewegungsbahn der Objektdatenerfassungseinheit. Unter "im Wesentlichen parallel" soll hier insbesondere eine Ausrichtung einer Richtung relativ zu einer Bezugsrichtung, insbesondere in einer Ebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Es ist auch denkbar, dass die Bewegungsbahn der Kontrasteinheit von der Bewegungsbahn der Objektdatenerfassungseinheit unabhängig ausgebildet ist. Insbesondere soll unter "automatisiert" verstanden werden, dass die Antriebseinheit über eine, insbesondere zentrale, Recheneinheit gesteuert und/oder geregelt wird. Insbesondere steuert und/oder regelt die Recheneinheit die Antriebseinheit anhand einer Liste von, insbesondere zuvor bestimmten, Perspektiven, aus welchen das Objekt erfasst werden soll. Durch die erfindungsgemäße Ausgestaltung der Erfassungsvorrichtung kann vorteilhaft ein Hintergrund, insbesondere an eine Position der Objektdatenerfassungseinheit, angepasst werden.

Unter "simultan bewegen" soll insbesondere verstanden werden, dass die Kontrasteinheit und die Objektdatenerfassungseinheit zumindest nach Abschluss der Bewegung, die gleiche relative Position und die gleiche relative Ausrichtung zueinander aufweisen, wie vor der Bewegung. Die Bewegung der Kontrasteinheit und die Bewegung der Objektdatenerfassungseinheit können gleichzeitig stattfinden oder nacheinander ausgeführt werden. Es ist auch denkbar, dass die gleiche relative Position und die gleiche relative Ausrichtung
zueinander, während der gesamten Bewegung beibehalten werden. Insbesondere weisen die Kontrasteinheit und die Objektdatenerfassungseinheit eine gemeinsame Schwenkund/oder Drehachse auf, um die die Objektdatenerfassungseinheit und die Kontrasteinheit schwenk- und/oder drehbar gelagert sind. Es ist denkbar, dass die Bewegungseinheit als mehrachsiger Roboterarm ausgebildet ist, an dem die Objektdatenerfassungseinheit und die Kontrasteinheit zusammen angeordnet sind. Ferner ist auch denkbar, dass die Bewegungseinheit als eine Schieneneinheit ausgebildet ist, an der die Objektdatenerfassungseinheit und die Kontrasteinheit zusammen angeordnet sind. Die Objektdatenerfassungs-einheit und die Kontrasteinheit können zusammen an einem einzelnen Bewegungselement der Bewegungseinheit, wie beispielsweise an einem beweglich gelagerten Führungsschlitten, angeordnet sein oder die Objektdatenerfassungseinheit und die Kontrasteinheit können jeweils an einem separaten Bewegungselement der Bewegungseinheit, wie beispielsweise jeweils an einem separaten Führungsschlitten, angeordnet sein. Weitere, einem Fachmann als sinnvoll er-scheinende Ausgestaltungen und/oder Anordnungen der Kontrasteinheit sind ebenfalls denkbar. Durch die erfindungsgemäße Ausgestaltung der Erfassungsvorrichtung kann vorteilhaft ein gleichbleibender Hintergrund unabhängig von der relativen Position von Objekt und Objektdatenerfassungseinheit bereitgestellt werden.

Unter "im Wesentlichen starr" soll insbesondere verstanden werden, dass eine relative Position und eine relative Ausrichtung der Kontrasteinheit und der Objektdatenerfassungseinheit zueinander, zumindest unter einer durch die Antriebseinheit ausgeübten Kraft und/oder einem durch die Antriebseinheit ausgeübten Drehmoment, erhalten bleibt. Bevorzugt ist die Struktureinheit als gemeinsamer Führungsschlitten ausgebildet. Alternativ oder zusätzlich umfasst die Struktureinheit zumindest eine, vorzugsweise zwei, Kopplungsstangen, die die Bewegungseinheit der Objektdatenerfassungseinheit und die Bewegungseinheit der Kontrasteinheit miteinander verbinden. Durch die erfindungsgemäße Ausgestaltung der Erfassungsvorrichtung kann vorteilhaft einfach und zuverlässig sichergestellt werden, dass sich die Kontrasteinheit und die Objektdateneinheit simultan zueinander bewegen.

Ferner wird eine Steuer- und/oder Regeleinheit vorgeschlagen, die dazu vorgesehen ist, zumindest einen Betriebsparameter der Erfassungsvorrichtung abhängig von zumindest einem Objektparameter einzustellen. Insbesondere ist die Steuer- und/oder Regeleinheit dazu vorgesehen, anhand der Betriebsparameter alle Bewegungsabläufe, die durch die Bewegungsvorrichtung ermöglicht werden, individuell und stufenlos aufeinander abzustimmen. Ein Objektparameter ist insbesondere eine einzelne Information über ein Objekt und/oder eine Anweisung zu einem Objekt. Die Information und/oder Anweisung können/kann vom Objekt selbst abhängen und/oder situationsbedingt gegeben sein. Ein Objektparameter kann beispielsweise als eine maximale Erstreckung des Objekts ausgebildet sein, als ein Gewicht, als eine relative Anordnung auf der Objektträgereinheit und/oder ein Verschmutzungsgrad. Ein Betriebsparameter der Erfassungsvorrichtung umfasst beispielsweise die zu verwendenden Perspektiven, die Anzahl der Objektdaten, die ein multipler Objektdatensatz umfasst, die Drehgeschwindigkeit der Objektträgereinheit, die Aktivierung der Aufbereitungseinheit, die Geschwindigkeit der Transporteinheit, die Stärke eines Luftgebläses und/oder ein anderer dem Fachmann als sinnvoll erscheinender Parameter, welcher zu einer zuverlässigen Erfassung eines multiplen Objektdatensatzes angepasst werden kann. Durch die erfindungsgemäße Ausgestaltung der Erfassungsvorrichtung kann vorteilhaft eine zuverlässige Erfassung eines multiplen Objektdatensatzes erreicht werden. Insbesondere kann die Erfassungsvorrichtung schnell und zuverlässig an Objekte mit verschiedenen Objektparametern angepasst werden.

Weiter wird eine Identifizierungseinheit zu einer Voraberfassung von zumindest einem Objektparameter vorgeschlagen. Die Identifizierungseinheit umfasst bevorzugt eine Scaneinheit zum Einlesen eines Objektparameters. Vorzugsweise ist der Objektparameter als eindeutige Identifizierungsnummer ausgebildet, beispielsweise als EAN. Vorzugsweise ist die Identifizierungsnummer in einem Identifizierungselement hinterlegt, beispielsweise als Barcode, QR-code und/oder RFID-tag. Vorzugsweise wird die Identifizierungsnummer bei einem Beladen der Transporteinheit und/oder bei einer Positionierung des Objekts in dem Objekterfassungsbereich eingelesen. Vorzugsweise können anhand der Identifizierungsnummer weitere Objektparameter, beispielsweise Abmessungen und/oder Gewicht, von einer Datenbank abgerufen werden. Bevorzugt ist die Identifizierungsnummer eineindeutig. Alternativ ordnet die Identifizierungsnummer ein Objekt einer bestimmten Kategorie von Objekten mit ähnlichen weiteren Objektparametern zu. Bevorzugt handelt es sich bei der Scaneinheit um einen Handscanner. In einer weiteren Ausgestaltung der Erfindung könnte die Scaneinheit auch in den Objektträger, die Transporteinheit und/oder die Schleuseneinheit integriert sein, insbesondere zu einer automatisierten Erfassung eines Objektparameters. Das Identifizierungselement ist bevorzugt am Objekt angeordnet und/oder in das Objekt integriert. Es ist aber auch denkbar, dass das Identifizierungsmerkmal räumlich getrennt von dem Objekt angeordnet ist, beispielsweise einer Verpackung und/oder einem Datenblatt. Durch die erfindungsgemäße Ausgestaltung der Erfassungsvorrichtung können Betriebsparameter der Erfassungsvorrichtung schnell an unterschiedliche Objekte angepasst werden. Vorteilhaft lassen sich erfasste multiple Objektdatensätze einem Objekt zuverlässig zuordnen.

Darüber hinaus wird eine Identifizierungseinheit zu einer Voraberfassung von zumindest einem Objektträgerparameter vorgeschlagen. Die Identifizierungseinheit umfasst bevorzugt eine Scaneinheit zum Einlesen eines Objektträgerparameters. Vorzugsweise ist der Objektträgerparameter als eindeutige Identifizierungsnummer ausgebildet. Vorzugsweise ist die Identifizierungsnummer in einem Identifizierungselement hinterlegt, beispielsweise als Barcode, QR-Code und/oder RFID-tag. Vorzugsweise wird die Identifizierungsnummer bei einem Beladen der Transporteinheit und/oder bei einer Positionierung des Objekts auf dem Objektträger eingelesen. Vorzugsweise umfasst die Identifizierungseinheit eine weitere Scaneinheit, zu einem Einlesen der Identifizierungsnummer unmittelbar vor einer Anordnung des Objektträgers im Objekterfassungsbereich. Bevorzugt ist die Identifizierungsnummer eineindeutig. Insbesondere handelt es sich um eine fortlaufende Nummerierung. Bevorzugt handelt es sich bei der Scaneinheit um einen Handscanner. Vorzugsweise ist die weitere Scaneinheit automatisiert ausgebildet. Durch die erfindungsgemäße Ausgestaltung der Erfassungsvorrichtung können Betriebsparameter der Erfassungsvorrichtung schnell an unterschiedliche Objektträger angepasst werden.

Weiter wird vorgeschlagen, dass die Identifizierungseinheit dazu vorgesehen ist, ein Objektträgerparameter bezüglich eines Objektparameters auszuwerten. Vorzugsweise weist die Identifizierungseinheit eine Scaneinheit auf, die sowohl ein Einlesen eines Objektparameters, insbesondere eine Identifizierungsnummer, und eines Objektträgerparameters, insbesondere eine Identifizierungsnummer, ermöglicht. Bevorzugt wird in der Identifizierungseinheit ein Objektträgerparameter anhand eines Objektparameters einem Objekt zugeordnet. Vorzugsweise können anhand des Objektträgerparameters weitere Objektparameter, beispielsweise Abmessungen und/oder Gewicht, von einer Datenbank abgerufen werden. Durch die erfindungsgemäße Ausgestaltung der Erfassungsvorrichtung können insbesondere bei Objekten mit sehr unterschiedlichen Objektparametern eine Voraberfassung von Objektparametern auf einfache Weise sichergestellt werden.

Ferner wird eine Kommunikationsvorrichtung zu einem Empfang von Objektparametern vorgeschlagen. Insbesondere weist die Erfassungsvorrichtung eine Schnittstelle zu einer Kommunikation mit einer Lager- und/oder Logistiksoftware auf, um schnell und zuverlässig Objektparameter zu empfangen und/oder abzugleichen. Durch die erfindungsgemäße Ausgestaltung der Erfassungsvorrichtung können Fehlzuordnungen erkannt werden.

Des Weiteren wird vorgeschlagen, dass die Objektträgereinheit eine Gewichtserfassungseinheit umfasst. Unter einer "Gewichtserfassungseinheit" soll insbesondere eine Einheit verstanden werden, die zumindest ein Gewicht, bevorzugt eine Masse, eines Objekts erfassen kann. Die Gewichtserfassungseinheit kann beispielsweise als Druckplatte in den Objektträger eingelassen sein. Alternativ erfasst die Gewichtserfassungseinheit ein Gewicht über die Kräfte und/oder Drehmomente auf die Lagereinheit. Durch die erfindungsgemäße Ausgestaltung der Erfassungsvorrichtung kann ein multipler Objektdatensatz auch eine Information über das Gewicht des erfassten Objekts enthalten.

Ferner wird eine Abmessungserfassungseinheit vorgeschlagen. Unter einer "Abmessungserfassungseinheit" soll insbesondere eine Einheit verstanden werden, die zumindest eine Erstreckung eines Objekts erfassen kann. Bevorzugt weist die Abmessungserfassungseinheit ein beweglich gelagertes Lasermodul zu einer Time-of-Flight Messung auf. Das Lasermodul kann dabei form- und oder kraftschlüssig mit der Bewegungseinheit der Objektdatenerfassungseinheit und/oder der Kontrasteinheit verbunden sein. Alternativ weist die Bewegungsvorrichtung eine Lasermodulbewegungseinheit auf, zu einer unabhängigen Bewegung des Lasermoduls von der Objektdatenerfassungseinheit. Vorzugsweise umfasst die Lasermodulbewegungseinheit einen Führungsschlitten. Bevorzugt ist der Führungsschlitten an der Führungseinheit der Objektdatenerfassungsvorrichtung und/oder an der Führungseinheit der Kontrasteinheit angeordnet. Alternativ weist die Lasermodulbewegungseinheit eine von der Objektdatenerfassungsvorrichtung und/oder der Kontrasteinheit unabhängige Bewegungsbahn auf. In einer alternativen Ausgestaltung wird eine Erstreckung eines Objekts mit einer Recheneinheit anhand des mit der Objektdatenerfassungseinheit erfassten multiplen Objektdatensatzes und Bewegungsdaten der Objektträgereinheit, insbesondere einer Drehgeschwindigkeit, mit einem Structure-from-Motion Verfahren errechnet. Es ist auch denkbar, dass die "Abmessungserfassungseinheit" eine Beleuchtungseinheit und eine Detektionseinheit umfasst, um aus einem Durchlichtund/oder Auflicht-Verfahren eine Erstreckung zu erhalten. Es ist auch denkbar, dass mehrere Verfahren miteinander kombiniert werden. Durch die erfindungsgemäße Ausgestaltung der Erfassungsvorrichtung kann ein multipler Objektdatensatz auch eine Information über die Abmessungen des erfassten Objekts enthalten.

Darüber hinaus wird eine Durchstrahleinheit, insbesondere Röntgeneinheit, vorgeschlagen, die dazu vorgesehen ist, zumindest ein Objekt zumindest teilweise zu durchstrahlen. Die Durchstrahleinheit weist vorzugsweise zumindest eine Röntgeneinheit und einen Röntgenschirm auf. Alternativ und/oder zusätzlich weist die Durchstrahleinheit eine Ultraschalleinheit auf. Die Durchstrahleinheit kann dabei form- und oder kraftschlüssig mit der Bewegungseinheit der Objektdatenerfassungseinheit und/oder der Kontrasteinheit verbunden sein. Alternativ weist die Bewegungsvorrichtung eine Durchstrahlbewegungseinheit auf, zu einer unabhängigen Bewegung der Durchstrahleinheit von der Objektdatenerfassungseinheit und/oder der Kontrasteinheit. Vorzugsweise umfasst die Durchstrahlbewegungseinheit einen Führungsschlitten. Bevorzugt ist der Führungsschlitten an der Führungseinheit der Objektdatenerfassungsvorrichtung und/oder an der Führungseinheit der Kontrasteinheit angeordnet. Alternativ weist die Durchstrahlbewegungseinheit eine von der Objektdatenerfassungsvorrichtung und/oder der Kontrasteinheit unabhängige Bewegungsbahn auf. Es ist auch denkbar, dass die Durchstrahlbewegungseinheit unbeweglich ist. Durch die erfindungsgemäße Ausgestaltung der Erfassungsvorrichtung kann ein multipler Objektdatensatz auch eine Information über die innere Struktur eines Objekts enthalten. Insbesondere kann erkannt werden, ob das Objekt hohl oder massiv ist. Mit Daten über die Abmessungen kann zudem auf eine Dichte geschlossen werden.

Ferner wird ein System vorgeschlagen mit einer erfindungsgemäßen Erfassungsvorrichtung, mit einer Speichereinheit mit zumindest teilweise mit der Erfassungsvorrichtung erzeugten Datensätzen und mit einer mobilen Erfassungseinheit sowie mit einer Recheneinheit, die dazu vorgesehen ist, mit der mobilen Erfassungseinheit erfasste Daten zumindest unter Berücksichtigung der Speichereinheit auszuwerten. Bevorzugt ist die Speichereinheit dazu vorgesehen, multiple Objektdatensätze zumindest temporär abzulegen. Vorzugsweise umfassen die mittels des Systems oder mittels der Erfassungsvorrichtung erzeugten Objektdatensätze von erfassten Objekten Informationen in Bezug auf ein eingestelltes Setting der Erfassungsvorrichtung während der Erfassung, eine Abmessung des Objekts, ein Gewicht des Objekts, eine Bounding Box des Objekts, ein Volumenmodell des Objekts, 3D-Daten des Objekts, ein Colorprofiling der Erfassungsvorrichtung oder weitere, einem Fachmann als sinnvoll erscheinende Daten. Vorzugsweise werden die Objektdatensätze von erfassten Objekten als sogenannte Metadaten, insbesondere gemäß Exif (Exchangeable Image File Format), in den Bilddateien der erfassten Objekte hinterlegt. Es ist jedoch auch denkbar, dass die Objektdatensätze von erfassten Objekten auf eine andere Art und Weise gespeichert werden, wie beispielsweise in einem separaten Dateiformat, als elektronisches Wasserzeichen, separat zur Bilddatei in einer Datenbank o. dgl. Es ist denkbar, dass die Erfassungsvorrichtung oder das die Erfassungsvorrichtung umfassende System ein oder mehrere Waagen aufweist, mittels denen zumindest ein als Gewicht ausgebildete Kenngröße erfassbar sind. Vorzugsweise ist/sind die eine oder mehrere Waagen zumindest datentechnisch mit der Recheneinheit verbunden. Besonders bevorzugt ist die Speichereinheit dazu vorgesehen, Datensätze zu speichern, die zumindest teilweise mit der Erfassungsvorrichtung erzeugt wurden. Bevorzugt ist die Speichereinheit räumlich getrennt von der Erfassungsvorrichtung ausgebildet. Die Recheneinheit ist dazu vorgesehen, einen Objekteinlernprozess durchzuführen. Unter einem "Objekteinlernprozess" soll insbesondere eine Verarbeitung der multiplen Objektdatensätze zu einer weiteren Verwendung verstanden werden. Beispielsweise kann ein Objekteinlernprozess die Erstellung einer Rundumansicht des Objekts umfassen, die Erstellung eines dreidimensionalen Modells des Objekts und/oder die Extraktion charakteristischer Merkmale, insbesondere zu einem Ermöglichen einer Mustererkennung. Vorzugsweise werden die von der Erfassungsvorrichtung erzeugten multiplen Datensätze zu Datensätzen verarbeitet, die zumindest teilweise mit der Erfassungsvorrichtung erzeugt wurden. Unter "zumindest teilweise mit der Erfassungsvorrichtung erzeugt" soll insbesondere verstanden werden, dass zur Verarbeitung eines multiplen Datensatzes zumindest eine weitere Information hinzugezogen wird. Bevorzugt handelt es sich bei der weiteren Information um einen weiteren multiplen Datensatz eines weiteren Objekts, das zumindest bezüglich einer Art von Objektdaten in eine gleiche Kategorie wie das Objekt eingeordnet werden kann. Unter einer "mobilen Erfassungseinheit" soll insbesondere verstanden werden, dass die mobile Erfassungseinheit in einem vorgesehenen Betriebszustand von Hand tragbar, insbesondere ortsungebunden betreibbar ist. Bevorzugt ist die mobile Eingabeeinheit von einer Person direkt oder indirekt am Körper tragbar, zum Beispiel als Armband und/oder in einer Tasche einer Kleidung. Beispielsweise kann die mobile Eingabeeinheit als Smartphone, Tablet, Smartwatch und/oder als Peripheral Head-Mounted Display (PHMD) ausgebildet sein. Die mobile Erfassungseinheit ist insbesondere dazu vorgesehen, Objektdaten zu erfassen. Darüber hinaus hat die mobile Eingabeeinheit eine Kommunikationseinheit zu einer Kommunikation mit der Recheneinheit. Die Recheneinheit ist dazu vorgesehen, anhand der von der mobilen Erfassungseinheit erfassten Objektdaten, das Objekt unter Berücksichtigung der in der Speichereinheit hinterlegten Datensätze zu identifizieren. Es ist auch denkbar, dass die Recheneinheit dazu vorgesehen ist, anhand der von der Erfassungsvorrichtung erfassten multiplen Objektdatensätze, das Objekt unter Berücksichtigung der in der Speichereinheit hinterlegten Datensätze zu identifizieren. Durch die erfindungsgemäße Ausgestaltung des Systems kann eine Datenbank erstellt werden, die eine Identifizierung eines Objekts mit einfachen Mitteln erlaubt. Insbesondere können zusätzliche Informationen über das Objekt unmittelbar abgerufen werden.

Weiter geht die Erfindung aus von einem Verfahren zu einer Erfassung von multiplen Objektdatensätzen zumindest eines Objekts, mit einer erfindungsgemäßen Erfassungsvorrichtung und/oder einem erfindungsgemäßen System. Es wird vorgeschlagen, dass in zumindest einem Verfahrensschritt zumindest eine Kenngröße, insbesondere eine Bewegungskenngröße und/oder eine Positionskenngröße, einer Kontrasteinheit der Erfassungsvorrichtung in Abhängigkeit von einer Kenngröße eines zu erfassenden Objekts, von einer Kenngröße der Objektdatenerfassungseinheit und/oder von einer Kenngröße einer Beleuchtungseinheit der Erfassungsvorrichtung geändert wird.

Vorzugsweise wird in zumindest einem Verfahrensschritt eine Kenngröße, insbesondere eine Bewegungskenngröße und/oder eine Positionskenngröße, der Kontrasteinheit in Abhängigkeit von einer als Abmessung, insbesondere als Größe, als Schattenwurf o. dgl. ausgebildete Kenngröße eines zu erfassenden Objekts geändert, insbesondere infolge einer Bewegung der Kontrasteinheit mittels der Bewegungsvorrichtung relativ zu dem zu erfassenden Objekt. Bevorzugt wird in zumindest einem Verfahrensschritt eine Kenngröße, insbesondere eine Bewegungskenngröße und/oder eine Positionskenngröße, der Kontrasteinheit in Abhängigkeit von einer als Brennweite, als Fokus, als Belichtungszeit o. dgl. ausgebildeten Kenngröße der, insbesondere als Kamera ausgebildeten, Objektdatenerfassungseinheit geändert, insbesondere infolge einer Bewegung der Kontrasteinheit mittels der Bewegungsvorrichtung relativ zur Objektdatenerfassungseinheit. Vorzugsweise wird in zumindest einem Verfahrensschritt eine Kenngröße, insbesondere eine Bewegungskenngröße und/oder eine Positionskenngröße, der Kontrasteinheit in Abhängigkeit von einer als Beleuchtungsstärke, einer Helligkeit o. dgl. ausgebildeten Kenngröße der Beleuchtungseinheit geändert, insbesondere infolge einer Bewegung der Kontrasteinheit mittels der Bewegungsvorrichtung relativ zur Beleuchtungseinheit. Mittels der erfindungs-gemäßen Ausgestaltung kann eine vorteilhafte Positionierung und/oder Bewegung der Kontrasteinheit zu einer detailgetreuen Erfassung von Bilddaten eines Objekts erreicht werden.

Weiterhin wird ein Verfahren mit einer erfindungsgemäßen Erfassungsvorrichtung und/oder einem erfindungsgemäßen System vorgeschlagen, bei dem in zumindest einem Verfahrensschritt während einer Rückbewegung der Bewegungsvorrichtung nach einer Vorbewegung zurück in eine Ausgangsposition der Bewegungsvorrichtung zumindest ein multipler Datensatz erhoben wird. Bevorzugt werden die Bewegungsvorrichtung und die Objektdatenerfassungseinheit von einer, insbesondere zentralen, Recheneinheit gesteuert und/oder geregelt. Insbesondere steuert und/oder regelt die Recheneinheit die definierte Relativbewegung und zumindest den Erfassungszeitpunkt der Objektdatenerfassungseinheit. Vorzugsweise weist die Bewegungsvorrichtung eine definierte Ausgangslage auf, von welcher eine definierte Relativbewegung aus startet. Unter einer "Vorbewegung" soll insbesondere eine Bewegung verstanden werden, die von der Ausgangslage wegführt. Unter einer "Rückbewegung" soll insbesondere eine Bewegung verstanden werden, die zur Ausgangslage hinführt. Eine Rückbewegung kann durch eine Umkehrung der Bewegungsbahn während der Vorbewegung oder durch eine Weiterbewegung entlang einer geschlossenen Bewegungsbahn realisiert werden. Durch die erfindungsgemäße Ausgestaltung des Verfahrens kann eine Totzeit der Maschine zwischen zwei Erfassungen verschiedener multipler Objektdatensätze zu einer Wiederherstellung der Ausgangsposition der Bewegungsvorrichtung vorteilhaft minimiert werden.

Ferner wird ein Verfahren mit einer erfindungsgemäßen Erfassungsvorrichtung und/oder einem erfindungsgemäßen System vorgeschlagen, bei dem in zumindest einem Verfahrensschritt aus zumindest einem Datensatz auf ein Material geschlossen wird. Bevorzugt schließt die Recheneinheit zumindest aus Farbe und Gewicht des Objekts durch Abgleich mit einer Datenbank auf ein Material. Bevorzugt wird zu einer Materialerkennung Abmessungen des Objekts hinzugezogen, insbesondere eine Information über die Dichte. Es ist denkbar, dass beispielsweise über Laserspektroskopie weitere Daten bezüglich eines Materials des Objekts erhoben werden. Durch die erfindungsgemäße Ausgestaltung des Verfahrens können insbesondere gleich aussehende Objekte voneinander unterschieden werden.

Des Weiteren wird ein Verfahren mit einem erfindungsgemäßen System vorgeschlagen, bei dem die erstellten Objektdatensätze in zumindest einem Verfahrensschritt zu einem maschinellen Lernen, insbesondere mit einem neuronalen Netz, ausgewertet werden. Weiterhin wird ein Verfahren mit einem erfindungsgemäßen System vorgeschlagen, bei dem die erstellten Objektdatensätze in zumindest einem Verfahrensschritt zu einem Erkennen des Objekts ausgewertet werden. Darüber hinaus wird ein Verfahren mit einem erfindungsgemäßen System vorgeschlagen, bei dem die mit der mobilen Erfassungseinheit erfassten Daten in zumindest einem Verfahrensschritt zu einem Erkennen des Objekts ausgewertet werden. Durch die erfindungsgemäße Ausgestaltung des Verfahrens können insbesondere eine schnelle und zuverlässige Identifizierung eines erfassten Objekts erreicht werden.

Die erfindungsgemäße Erfassungsvorrichtung, das erfindungsgemäße System und/oder das erfindungsgemäße Verfahren sollen/soll hierbei nicht auf die oben beschriebene Anwendung und Ausführungsform beschränkt sein. Insbesondere können/kann die erfindungsgemäße Erfassungsvorrichtung, das erfindungsgemäße System und/oder das erfindungsgemäße Verfahren zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnung

Weitere Vorteile ergeben sich aus der folgenden Zeichnungsbeschreibung. In der Zeichnung sind acht Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung des erfindungsgemäßen Systems für intransparente Objektträger,
- Fig. 2: eine schematische Darstellung der Bewegungsvorrichtung mit einem intransparenten Objektträger,
- Fig. 3: eine schematische Darstellung der Bewegungseinheit der Objektdatenerfassungseinheit,
- Fig. 4: eine schematische Darstellung eines Systems für transparente Objektträger,
- Fig. 5: eine schematische Darstellung der Bewegungsvorrichtung mit einem transparenten Objektträger,
- Fig. 6: eine schematische Darstellung der Lagereinheit bei einer seitlichen Anordnung,
- Fig. 7: eine schematische Darstellung der Bewegungsvorrichtung mit einem Strukturelement für eine simultane Bewegung von Objektdatenerfassungseinheit und Kontrasteinheit,
- Fig. 8: eine schematische Darstellung der Lagereinheit bei einer unterseitigen Anordnung,
- Fig. 9: eine schematische Darstellung der Transporteinheit und einer Positionierungseinheit,
- Fig. 10: eine schematische Darstellung der Transporteinheit und einer weiteren Positionierungseinheit,
- Fig. 11: eine schematische Darstellung der Schleuseneinheit,
- Fig. 12: eine schematische Darstellung des Verfahrens zur Erfassung eines multiplen Objektdatensatzes,
- Fig. 13: eine schematische Darstellung des Verfahrens zum Erkennen von Objekten,
- Fig. 14: eine schematische Darstellung einer Draufsicht einer alternativen Erfassungsvorrichtung,
- Fig. 15: eine schematische Darstellung einer Seitenansicht der alternativen Erfassungsvorrichtung aus Fig. 14 und
- Fig. 16: eine schematische Darstellung einer weiteren alternativen Erfassungsvorrichtung.

### Beschreibung der Ausführungsbeispiele

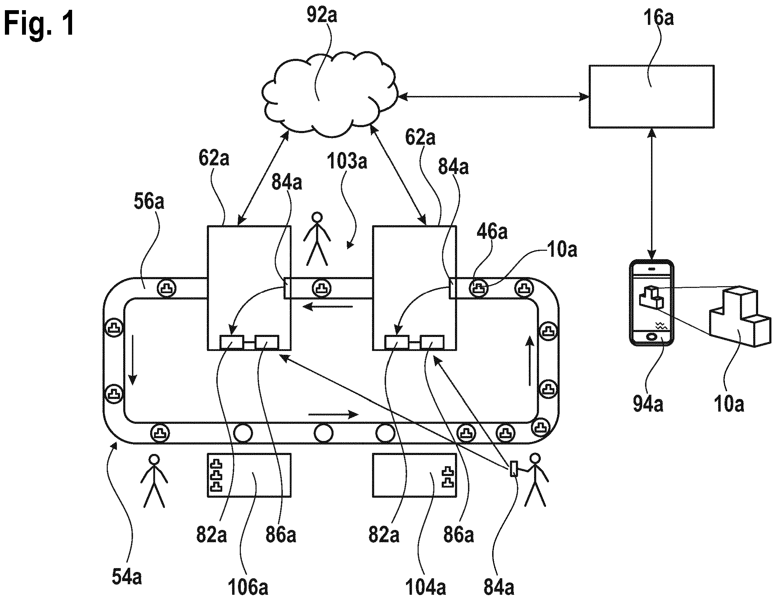

Figur 1 zeigt ein System mit einer Erfassungsvorrichtung mit einer Speichereinheit 92a mit zumindest teilweise mit der Erfassungsvorrichtung erzeugten Datensätzen und mit einer mobilen Erfassungseinheit 94a sowie mit einer Recheneinheit 16a, die dazu vorgesehen ist, mit der mobilen Erfassungseinheit 94a erfasste Daten zumindest unter Berücksichtigung der Speichereinheit 92a auszuwerten. Die Erfassungsvorrichtung weist eine Recheneinheit 16a auf, die dazu vorgesehen ist, einen Objekteinlernprozess durchzuführen.

Die Erfassungsvorrichtung umfasst eine Gehäuseeinheit 62a, die dazu vorgesehen ist, einen Objekterfassungsbereich zumindest teilweise nach außen abzuschirmen. Die Erfassungsvorrichtung umfasst eine Transporteinheit 54a, die dazu vorgesehen ist, Objekte 10a zumindest teilautomatisiert dem Objekterfassungsbereich zuzuführen. Die Transporteinheit 54a umfasst eine Bahnfördereinheit 56a, insbesondere eine Förderbandeinheit. Die Transporteinheit 54a ist dazu vorgesehen, zumindest zwei lösbar verbundene Objektträger 46a zu transportieren. Vorzugsweise transportiert die Transporteinheit 54a eine Vielzahl von Objektträgern 46a, wobei eine dargestellte Anzahl an Objektträgern 46a vorzugsweise lediglich beispielhaft ist. Insbesondere werden die Objektträger 46a in einem Beladebereich 104a mit je einem Objekt 10a beladen. Vorzugsweise werden die Objekte 10a nach einer Erfassung in, von den Gehäuseeinheiten 62a umgebenen, Objekterfassungsbereichen in einem Entladebereich 106a von den Objektträgern 46a, entfernt. Das Be- und/oder Entladen erfolgt beispielsweise manuell, wie insbesondere durch einen Arbeiter. In einer weiteren Ausgestaltung kann das Be- und/oder Entladen der Transporteinheit 54a auch insbesondere mittels einer Logistik- und Förderanlage, wie insbesondere mittels eines Roboters, automatisch erfolgen.

Die Erfassungsvorrichtung umfasst eine Identifizierungseinheit 84a zu einer Voraberfassung von Objektparametern. Die Erfassungsvorrichtung umfasst eine Identifizierungseinheit 84a zu einer Voraberfassung von Objektträgerparametern. Insbesondere umfasst die Identifizierungseinheit 84a je eine Scaneinheit, die an den Gehäuseeinheiten 62a angeordnet ist. Bevorzugt weist die Identifizierungseinheit 84a eine mobile Scaneinheit auf. Die mobile Scaneinheit ist insbesondere dazu vorgesehen, sowohl einen Objektparameter, als auch einen Objektträgerparameter zu erfassen. Insbesondere liest die mobile Scaneinheit beim Beladen der Objektträger 46a eine Identifizierungsnummer des Objektträgers 46a ein. Anschließend und/oder zuvor liest die mobile Scaneinheit bevorzugt eine Identifizierungsnummer des Objekts 10a ein. Es wäre jedoch auch denkbar, dass eine Identifizierungsnummer des Objekts 10a manuell der einen Identifizierungsnummer des Objektträgers 46a zugeordnet wird und lediglich von der Scaneinheit abgefragt wird. Vorzugsweise werden anhand der Identifizierungsnummer des Objekts 10a Objektparameter von einer internen und/oder externen Datenbank abgefragt. Die Erfassungsvorrichtung umfasst eine Kommunikationsvorrichtung 86a zu einem Empfang von Objektparametern. Insbesondere empfängt die Kommunikationsvorrichtung 86a zusätzlich zu den Objektparametern, die Identifizierungsnummer des Objektträgers 46a, welcher das zugehörige Objekt 10a trägt. Vorzugsweise transportiert die Bahnfördereinheit 56a das Objekt 10a auf dem Objektträger 46a nach dem Einlesen der Identifizierungszahlen zum ersten Objektdatenerfassungsbereich. Die Identifizierungseinheit 84a ist dazu vorgesehen, ein Objektträgerparameter bezüglich eines Objektparameters auszuwerten. Insbesondere erfasst die an der Gehäuseeinheit 62a angeordnete Scaneinheit die Identifizierungszahl des Objektträgers 46a beim Eintritt in den Innenraum der Gehäuseeinheit 62a. Insbesondere werden die von der Kommunikationsvorrichtung 86a empfangen Objektparameter anhand der Identifizierungszahl des Objektträgers 46a ausgewählt. Die Erfassungsvorrichtung umfasst eine Steuerund/oder Regeleinheit 82a, die dazu vorgesehen ist, zumindest einen Betriebsparameter der Erfassungsvorrichtung abhängig von zumindest einem Objektparameter einzustellen.

In einer Ausgestaltung mit intransparenten Objektträgern 46a muss zu einer Erfassung der dem Objektträger 46a zugewandten Seite eines auf dem Objektträger 46a ruhenden Objekts 10a zumindest einmal gewendet 103a werden. Um höhere Durchsatzzahlen zu erreichen weist, das System einen weiteren Objekterfassungsbereich auf, der dazu vorgesehen ist, nach einem Wenden 103a des Objekts 10a eine ergänzende Erfassung des Objekts 10a zu erstellen. Die Objekterfassungsbereiche sind insbesondere identisch ausgebildet. Es wäre jedoch auch denkbar, dass ein zweiter Objekterfassungsbereich eine gegenüber dem ersten Objekterfassungsbereich reduzierte Funktionalität aufweist.

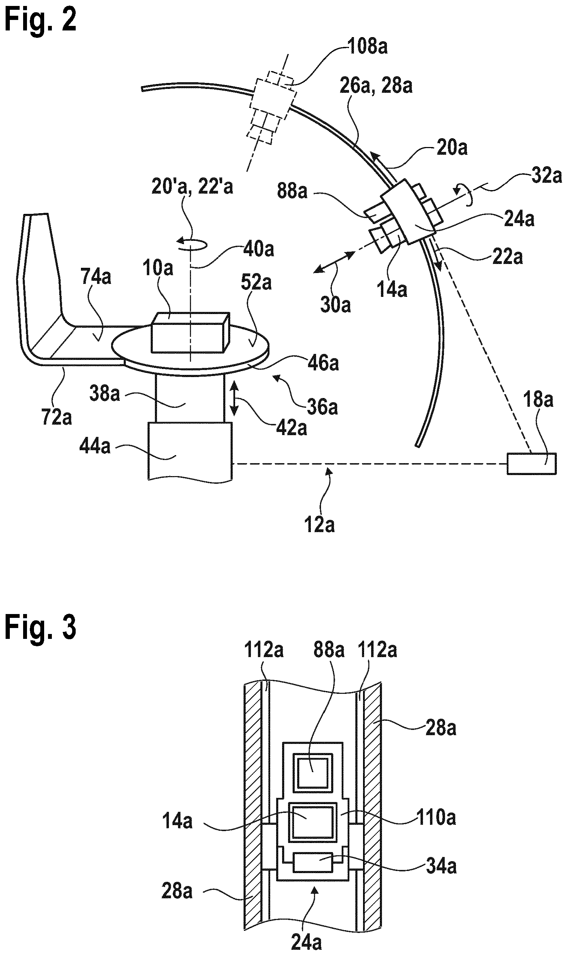

Figur 2 zeigt die Erfassungsvorrichtung zu einer zumindest teilautomatisierten Erfassung von multiplen Objektdatensätzen zumindest des Objekts 10a, mit einer Bewegungsvorrichtung 12a zur Erzeugung einer definierten Relativbewegung zwischen zumindest einer Objektdatenerfassungseinheit 14a und des zumindest einen Objekts 10a. Die Bewegungsvorrichtung 12a ist zur Erfassung von Objektdaten aus multiplen Perspektiven vorgesehen.

Die Bewegungsvorrichtung 12a weist zumindest eine Bewegungseinheit 24a zu einer definierten Bewegung der zumindest einen Objektdatenerfassungseinheit 14a auf. Die Bewegungseinheit 24a ist dazu vorgesehen, die zumindest eine Objektdatenerfassungseinheit 14a auf einer zumindest teilweise gekrümmten Bewegungsbahn 26a zu führen. Die Bewegungseinheit 24a weist zumindest eine teilweise gekrümmte Bahn 28a auf und ist dazu vorgesehen, die zumindest eine Objektdatenerfassungseinheit 14a entlang der zumindest teilweise gekrümmten Bahn 28 zu führen. Es ist denkbar, dass mehrere Objektdatenerfassungseinheiten 14a verwendet werden. In Figur 2 ist eine weitere Objektdatenerfassungseinheit 108a angedeutet. Insbesondere könnte jede Objektdatenerfassungseinheit 14a, 108a zu einem schnelleren Erfassen von Objektdaten aus multiplen Perspektiven einen Teilabschnitt der gekrümmten Bahn 28a abdecken. Insbesondere könnten die Objektdatenerfassungseinheiten 14a, 108a simultan oder unabhängig voneinander bewegt werden. Die Bewegungseinheit 24a ist dazu vorgesehen, die zumindest eine Objektdatenerfassungseinheit 14a entlang einer zumindest im Wesentlichen zu einer Bewegungsbahn 26a senkrechten Richtung 30a zu führen. Die Objektdatenerfassungseinheit 14a weist zumindest eine Schwenk- und/oder Drehachse 32a auf, um die die Objektdatenerfassungseinheit 14a schwenk- und/oder drehbar gelagert ist. Die Erfassungsvorrichtung umfasst eine Abmessungserfassungseinheit 88a. Vorzugsweise ist die Abmessungserfassungseinheit 88a als Lasermodul ausgebildet. Bevorzugt ist die Abmessungserfassungseinheit 88a auf einem mit der Objektdatenerfassungseinheit 14a gemeinsamen Führungsschlitten der Bewegungseinheit 24a montiert.

Die Erfassungsvorrichtung weist eine Objektträgereinheit 36a auf. Die Bewegungsvorrichtung 12a weist eine Lagereinheit 38a auf, über die die Objektträgereinheit 36a beweglich gelagert ist. Die Lagereinheit 38a weist zumindest eine Schwenk- und/oder Drehachse 40a auf, um die die Objektträgereinheit 36a schwenk- und/oder drehbar gelagert ist. Die Lagereinheit 38a weist zumindest eine Bewegungsbahn 42a auf, entlang der die Objektträgereinheit 36a bewegbar gelagert ist. Die Objektträgereinheit 36a ist vorzugsweise über die Lagereinheit 38a relativ zur Objektdatenerfassungseinheit 14a beweglich gelagert ist, insbesondere drehbar gelagert ist. Die Bewegungsvorrichtung 12a umfasst eine Antriebseinheit 44a, die dazu vorgesehen ist, die Objektträgereinheit 36a automatisiert zu bewegen. Die Bewegungsvorrichtung 12a umfasst vorzugsweise die Antriebseinheit 44a, die dazu vorgesehen ist, die Objektträgereinheit 36aund die Objektdatenerfassungseinheit 14agegenläufig zueinander zu bewegen, insbesondere um die Schwenk- und/oder Drehachse 40a der Lagereinheit 38a gegenläufig zu bewegen.

Die Objektträgereinheit 36a ist zur aktiven Beleuchtung vorgesehen. Die Objektträgereinheit 36a weist zumindest eine Lichtquelle 52a auf. Die Objektträgereinheit 36a weist zumindest eine Leuchtdiode (LED), insbesondere zumindest eine organische Leuchtdiode (OLED) auf. Vorzugsweise umfasst die Lichtquelle 52a einen OLED-Bildschirm, der flächig an dem Objektträger 46a angeordnet ist. Vorzugsweise weist die Objektträgereinheit zumindest eine transparente Schutzschicht auf, zu einem Schutz der Lichtquelle 52a.

Die Objektträgereinheit 36a umfasst eine Gewichtserfassungseinheit. Die Objektträgereinheit 36a weist zumindest einen lösbar verbundenen Objektträger 46a auf. Vorzugsweise wird der Objektträger 46a zu einer Erfassung von Objektdaten durch die Lagereinheit 38a von der Bahnfördereinheit 56a (vgl. Figur 1) angehoben. Bevorzugt wird der Objektträger 46a nach der Erfassung von Objektdaten mittels der Lagereinheit 38a auf die Bahnfördereinheit 56a abgesenkt. Vorzugsweise weist die Bahnfördereinheit 56a zum Anheben und Absenken des Objektträgers 46a eine entsprechende Ausnehmung auf, durch die die Lagereinheit 38a mit dem Objektträger 46a temporär form- und/oder kraftschlüssig verbunden werden kann.

Die Erfassungsvorrichtung weist eine Recheneinheit 18a auf, die dazu vorgesehen ist, eine Vorbewegung 20a, 20'a und Rückbewegung 22a, 22'a einer Objektdatenerfassungseinheit 14a und/oder eines Objekts 10a zur Datenerfassung zu nutzen.

Die Erfassungsvorrichtung umfasst eine Kontrasteinheit 72a, die zu einer aktiven Beleuchtung vorgesehen ist. Die Erfassungsvorrichtung umfasst eine Kontrasteinheit 72a, welche zumindest eine Lichtquelle 74a aufweist. Die Erfassungsvorrichtung umfasst eine Kontrasteinheit 72a, welche zumindest eine Leuchtdiode, insbesondere zumindest eine organische Leuchtdiode, aufweist. Vorzugsweise ist die Kontrasteinheit 72a in zumindest einem Betriebszustand an der Objektträgereinheit 36a angeordnet. Es ist jedoch auch denkbar, dass die Kontrasteinheit 72a relativ zur Objektträgereinheit 36a beweglich gelagert ist, insbesondere zusammen mit der Objektdatenerfassungseinheit 14a oder relativ zur Objektträgereinheit 36a und relativ zur Objektdatenerfassungseinheit 14a beweglich gelagert ist. Vorzugsweise umfasst die Lichtquelle 74a einen OLED-Bildschirm, der flächig an der Kontrasteinheit 74a angeordnet ist.

Figur 3 zeigt eine mögliche Ausgestaltung der Bewegungseinheit 24a. Die Bewegungseinheit 24a umfasst eine Antriebseinheit 34a, die dazu vorgesehen ist, die Objektdatenerfassungseinheit 14a automatisiert zu bewegen. Insbesondere umfasst die Bewegungseinheit 24a einen Führungsschlitten, auf den die Objektdatenerfassungseinheit 14a montiert ist. Bevorzugt ist die gekrümmte Bahn 28a als Führungsschiene mit einer Führung 112a ausgebildet. Insbesondere umfasst die gekrümmte Bahn 28a zwei parallel laufende Bahnen. Bevorzugt ist der Führungsschlitten zwischen den parallel laufenden Bahnen angeordnet.

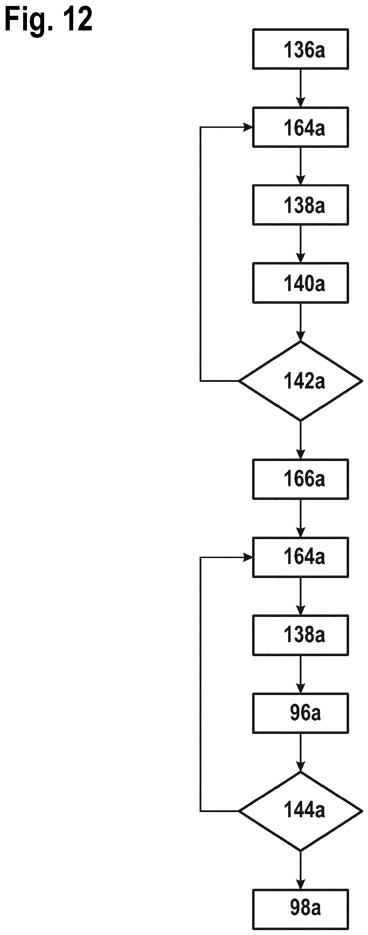

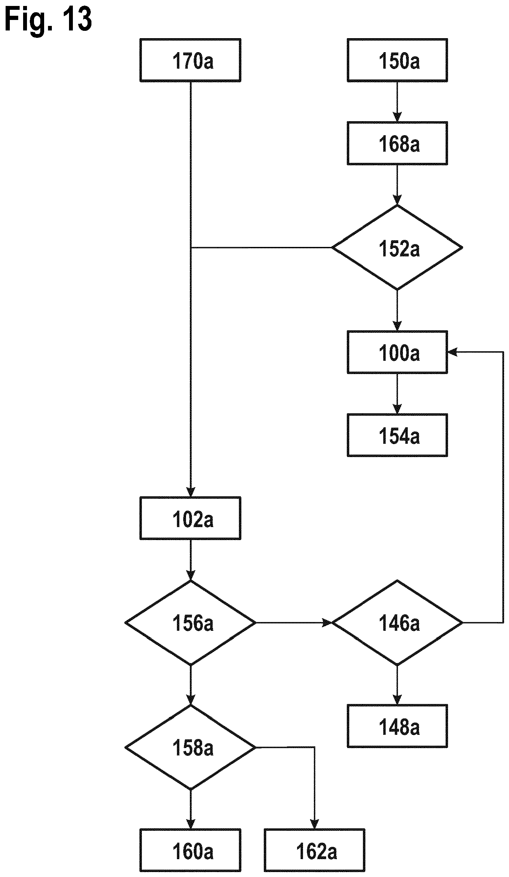

Figur 12 und 13 zeigen je ein Verfahren mit einer erfindungsgemäßen Erfassungsvorrichtung und/oder mit einem erfindungsgemäßen System.

Figur 12 zeigt eine schematische Darstellung des Verfahrens zur Erfassung eines multiplen Objektdatensatzes. Vorzugsweise wird in einer Initialphase 136a sichergestellt, dass sich die Bewegungsvorrichtung 12a in einer vorgesehenen Ausgangsposition 98a befindet. Bevorzugt wird mittels der Steuer- und/oder Regeleinheit 82a, insbesondere aufgrund einer Vorerfassung von Objektparametern, automatisch Betriebsparameter zumindest für die Bewegungsvorrichtung 12a und die Objektdatenerfassungseinheit 14a festgelegt. Insbesondere wird eine Liste mit Positionen für die Objektträgereinheit 36a und der Objektdatenerfassungseinheit 14a erstellt, bei denen eine Erfassung von Objektdaten mittels der Objektdatenerfassungseinheit 14a stattfindet. Bevorzugt wird in einem weiteren Verfahrensschritt 164a die Bewegungseinheit 24a der Objektdatenerfassungseinheit 14a auf die erste Position gesteuert und/oder geregelt. Vorzugweise wird in einem weiteren Verfahrensschritt oder bereits während die Bewegungseinheit 24a auf eine neue Position bewegt wird, die Objektträgereinheit 36a zu einer gleichmäßigen Drehung 138a um die Dreh- und/oder Schwenkachse 40a mittels der Antriebseinheit 44a angetrieben. Bevorzugt wird in einem weiteren Verfahrensschritt 140a in regelmäßigen Abständen, beispielsweise alle 10° der Drehbewegung der Objektträgereinheit 36a, Objektdaten mit der Objektdatenerfassungseinheit 14a erfasst. Insbesondere können die einzelnen Erfassungen beispielsweise mittels eines Drehwegsensors ausgelöst werden, oder in regelmäßigen auf eine Drehgeschwindigkeit der Objektträgereinheit 36a abgestimmten Zeitintervallen stattfinden. Bevorzugt wird in zumindest einem Verfahrensschritt zumindest eine Kenngröße, insbesondere eine Bewegungskenngröße und/oder eine Positionskenngröße, der Kontrasteinheit 72a in Abhängigkeit von einer Kenngröße des zu erfassenden Objekts 10a, von einer Kenngröße der Objektdatenerfassungseinheit 14a und/oder von einer Kenngröße einer Beleuchtungseinheit der Erfassungsvorrichtung geändert. Vorzugsweise wird in zumindest einem Verfahrensschritt eine Kenngröße, insbesondere eine Bewegungskenngröße und/oder eine Positionskenngröße, der Kontrasteinheit 72a in Abhängigkeit von einer als Abmessung, insbesondere als Größe, als Schattenwurf o. dgl. ausgebildete Kenngröße des zu erfassenden Objekts 10a geändert, insbesondere infolge einer Bewegung der Kontrasteinheit 72a mittels der Bewegungsvorrichtung 12a relativ zu dem zu erfassenden Objekt 10a. Bevorzugt wird in zumindest einem Verfahrensschritt eine Kenngröße, insbesondere eine Bewegungskenngröße und/oder eine Positionskenngröße, der Kontrasteinheit 72a in Abhängigkeit von einer als Brennweite, als Fokus, als Belichtungszeit o. dgl. ausgebildeten Kenngröße der, insbesondere als Kamera ausgebildeten, Objektdatenerfassungseinheit 14a geändert, insbesondere infolge einer Bewegung der Kontrasteinheit 72a mittels der Bewegungsvorrichtung 12a relativ zur Objektdatenerfassungseinheit 14a. Vorzugsweise wird in zumindest einem Verfahrensschritt eine Kenngröße, insbesondere eine Bewegungskenngröße und/oder eine Positionskenngröße, der Kontrasteinheit 72a in Abhängigkeit von einer als Beleuchtungsstärke, einer Helligkeit o. dgl. ausgebildeten Kenngröße der Beleuchtungseinheit geändert, insbesondere infolge einer Bewegung der Kontrasteinheit 72a mittels der Bewegungsvorrichtung 12a relativ zur Beleuchtungseinheit. Vorzugsweise wird nach einer, insbesondere vollständigen, Umdrehung der Objektträgereinheit 36a in einem weiteren Verfahrensschritt eine Überprüfung 142a durchgeführt, ob ein Ende der Liste mit Positionen erreicht ist. Vorzugsweise wird bei einem negativen Ergebnis der Überprüfung 142a die Bewegungseinheit 24a der Objektdatenerfassungseinheit 14a auf die nächste Position gesteuert und/oder geregelt. Bevorzugt wird bei einem positiven Ergebnis der Überprüfung 142a in einem weiteren Verfahrensschritt 166a eine Rückbewegung 22a eingeleitet. Bei dem Verfahren wird in zumindest einem Verfahrensschritt 96a während einer Rückbewegung 22a der Bewegungsvorrichtung 12a nach einer Vorbewegung 20a zurück in eine Ausgangsposition 98a der Bewegungsvorrichtung 12a zumindest ein multipler Datensatz erhoben. Insbesondere wird eine weitere Liste mit Positionen für eine Rückbewegung 22a analog abgehandelt. Wird bei einer entsprechenden weiteren Überprüfung 144a ein Ende der weiteren Liste mit Positionen erreicht, wird vorzugsweise die Bewegungsvorrichtung 12a in die Ausgangsposition 98a gesteuert. Bevorzugt enthält zumindest eine Liste Standardpositionen, beispielsweise bei einer Kreisbahn der Objektdatenerfassungseinheit 0°, 45° und 90° gegenüber der Ausgangslage 98a. Bevorzugt enthält zumindest eine Liste objektspezifische Positionen. Es ist auch denkbar, dass alle Positionen, unter denen eine Erfassung stattfindet, gleichmäßig auf alle Listen aufgeteilt werden. Die Drehung 138a kann insbesondere nach der Erfassung eines Datensatzes in dem Verfahrensschritt 96a, 140a angehalten werden oder durchgängig bis zu einer Rückkehr der Bewegungsvorrichtung 12a in die Ausgangslage 98a aufrechterhalten werden.

Figur 13 zeigt eine schematische Darstellung des Verfahrens zum Erkennen eines Objekts 10a. Insbesondere zeigt Figur 13 ein Verfahren mit einem erfindungsgemäßen System, bei dem die erstellten Objektdatensätze in zumindest einem Verfahrensschritt zu einem maschinellen Lernen 100a ausgewertet werden. Vorzugsweise werden zwei Phasen unterschieden. Insbesondere wird zwischen einer Einlernphase und einer Erkennungsphase unterschieden. Bevorzugt wird in zumindest einem Verfahrensschritt eine Überprüfung 152a durchgeführt, in welcher Phase das Verfahren sich befindet. Vorzugsweise wird in einem ersten Verfahrensschritt 150a zumindest ein multipler Objektdatensatz zumindest eines Objekts 10a mit der Erfassungsvorrichtung erfasst. Vorzugsweise werden in zumindest einem Verfahrensschritt die Objektträgereinheit 36a und die Objektdatenerfassungseinheit 14a, insbesondere um die Schwenk- und/oder Drehachse 40a der Lagereinheit 38a der Bewegungsvorrichtung 12a, gegenläufig zueinander bewegt, insbesondere zu einer Erfassung eines multiplen Objektdatensatzes zumindest eines Objekts 10a mittels der Erfassungsvorrichtung. Bevorzugt wird in einem weiteren Verfahrensschritt 168a der multiple Objektdatensatz in der Speichereinheit 92a hinterlegt. Vorzugsweise werden in der Einlernphase die erstellten Objektdatensätze in zumindest einem Verfahrensschritt zu einem maschinellen Lernen 100a ausgewertet. Bevorzugt werden die bei einem maschinellen Lernen 100a anfallenden Datensätze in einem weiteren Verfahrensschritt 154a in der Speichereinheit 92a hinterlegt. Insbesondere können die ursprünglichen multiplen Objektdatensätze in Verfahrensschritt 154a gelöscht werden. Bevorzugt kann nach einem Abschluss der Einlernphase das System zu einem Erkennen von zuvor erfassten Objekten 10a genutzt werden. Vorzugsweise werden Objektdaten über ein zu erkennendes Objekt 10a mit einer mobilen Erfassungseinheit 94a erfasst. Alternativ wird die Erfassungsvorrichtung in Verfahrensschritt 150a genutzt zu einer Erfassung von Objektdaten. Bevorzugt werden die Objektdaten der Recheneinheit 16a zugeführt. Bei dem Verfahren werden die erstellten Objektdatensätze in zumindest einem Verfahrensschritt zu einem Erkennen 102a des Objekts 10a ausgewertet. Bei dem Verfahren werden die mit der mobilen Erfassungseinheit 94a erfassten Daten in zumindest einem Verfahrensschritt zu einem Erkennen 102a des Objekts 10a ausgewertet. Insbesondere wird überprüft, ob die mit der Erfassungsvorrichtung erstellten Objektdatensätze in Verfahrensschritt 150a und/oder die mit der mobilen Erfassungseinheit 94a erfassten Daten in Verfahrensschritt 170a nach einer Auswertung durch die Recheneinheit 16a mit den in der Einlernphase erstellten Datensätzen zumindest teilweise übereinstimmen. Bevorzugt stimmen zwei Datensätze teilweise überein, wenn ein Datensatz eine Teilmenge des anderen ist. Vorzugsweise wird in einem weiteren Verfahrensschritt 156a überprüft, ob das Erkennen 102a erfolgreich war, insbesondere ob zumindest eine Übereinstimmung gefunden werden konnte. Konnten die erfassten Objektdaten mit keinem zuvor erfassten Objekt in Übereinstimmung gebracht werden, wird in einem optionalen Schritt eine Entscheidung 146a eines Bedieners abgefragt, ob die erfassten Objektdaten zu einem maschinellen Lernen 100a genutzt werden sollen, um die Liste erkennbarer Objekte zu erweitern und/oder um den in der Speichereinheit hinterlegten Datensatz zu einem bereits bekannten Objekt zu modifizieren. Vorzugsweise werden bei einer negativen Entscheidung 146a die Objektdaten in einem abschließenden Verfahrensschritt 148a gelöscht. Vorzugsweise wird nach einer erfolgreichen Erkennung 102a in einem weiteren Verfahrensschritt eine Zählung 158a der mit den erfassten Daten übereinstimmenden Datensätzen durchgeführt. Vorzugsweise wird bei einer einzigen teilweisen Übereinstimmung in einem abschließenden Verfahrensschritt 160a eine Information über das entsprechende Objekt, beispielsweise ein Name, eine Identifizierungs- und/oder Bestellnummer, ausgegeben. Vorzugsweise werden bei mehreren in Frage kommenden Objekten in einem Verfahrensschritt 162a eine Liste aller Übereinstimmungen ausgegeben. Bevorzugt wird eine Information ausgegeben, anhand derer die Objekte unterschieden werden können. Bei dem Verfahren wird in zumindest einem Verfahrensschritt aus zumindest einem Datensatz auf ein Material geschlossen. Bevorzugt wird während des maschinellen Lernens 100a und/oder des Erkennens 102a auf ein Material geschlossen. Es ist auch denkbar, dass bereits die Erfassungsvorrichtung bei der Erfassung eines multiplen Objektdatensatzes in Verfahrensschritt 150a zumindest ein Objektdatensatz nutzt, um auf ein Material zu schließen.

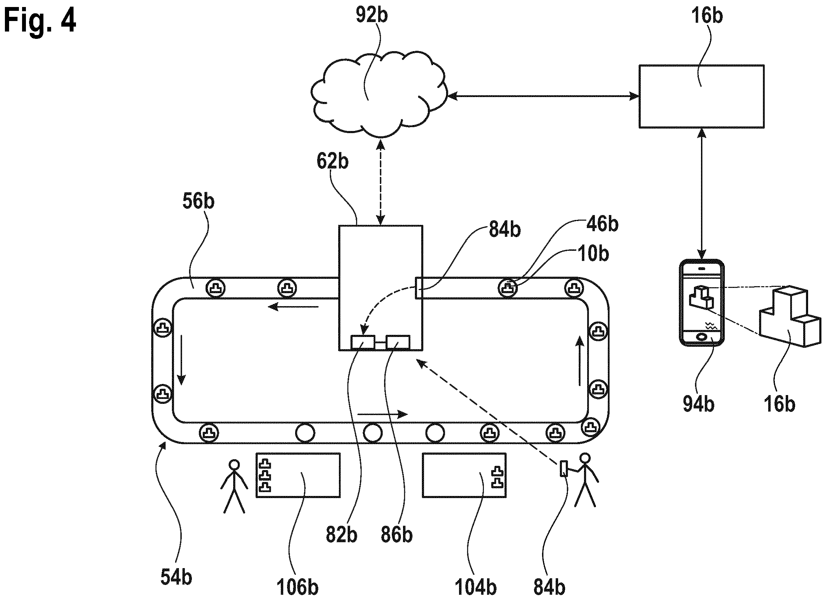

In den Figuren 4-6, 7-8, 9, 10, 11, 14, 15 und 16 ist je ein weiteres Ausführungsbeispiel der Erfindung gezeigt. Die nachfolgenden Beschreibungen und die Zeichnungen beschränken sich im Wesentlichen auf die Unterschiede zwischen den Ausführungsbeispielen, wobei bezüglich gleich bezeichneter Bauteile, insbesondere in Bezug auf Bauteile mit gleichen Bezugszeichen, grundsätzlich auch auf die Zeichnungen und/oder die Beschreibung der anderen Ausführungsbeispiele, insbesondere der Figuren 1 bis 3 sowie 12 und 13, verwiesen werden kann. Zur Unterscheidung der Ausführungsbeispiele ist der Buchstabe a den Bezugszeichen des Ausführungsbeispiels in den Figuren 1 bis 3 sowie 12 und 13 nachgestellt. In den Ausführungsbeispielen der Figuren 4-6, 7-8, 9, 10, 11, 14, 15 und 16 ist der Buchstabe a durch die Buchstaben b bis h ersetzt.

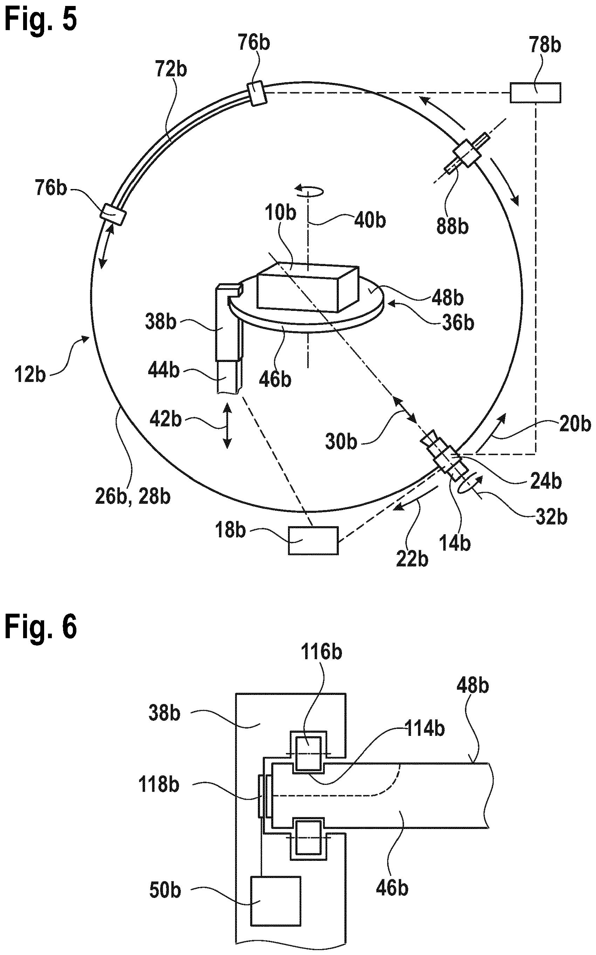

Figur 4 zeigt eine schematische Darstellung eines Systems mit einem einzigen Objektdatenerfassungsbereich der von einer Gehäuseeinheit 62b umschlossen wird. Insbesondere durch ein Verwenden eines Objektträgers 46b mit einer in zumindest einem Betriebszustand transparenten Objektträgerwandung 48b (vgl. Figur 5) kann ein manuelles Wenden 103a (vgl. Figur 1) des Objekts vermieden werden.

Figur 5 zeigt eine schematische Darstellung der Bewegungsvorrichtung 12b und Figur 6 eine schematische Darstellung der Lagereinheit 38b. Die Objektträgereinheit 36b weist zumindest einen Objektträger 46b auf, der eine in zumindest einem Betriebszustand transparente Objektträgerwandung 48b aufweist. Die Objektträgereinheit 36b weist eine Einstelleinheit 50b auf, mittels der ein Reflektionsgrad, ein Absorptionsgrad und/oder Transmissionsgrad einstellbar ist.

Die Einstelleinheit 50b ist insbesondere über einen Schleifkontakt 118b mit der Objektträgerwandung 48b verbunden. Bevorzugt erlaubt die Transparenz des Objektträgers 46b eine Erfassung von Objektdaten von der dem Objekt 10b abgewandten Seite des Objektträgers 46b. Vorzugsweise wird zu einer Erfassung eines multiplen Objektdatensatzes das Objekt 10b um die Schwenk- und/oder Drehachse 40b um 360° gedreht. Bevorzugt wird die Objektdatenerfassungseinheit 14b entlang der gekrümmten Bahn 28b zumindest auf einem Kreisbogen mit einem Mittelpunktswinkel von 180° bewegt. Vorteilhaft kann jede beliebige Perspektive, zumindest innerhalb einer Steuer- und/oder Regelgenauigkeit der Bewegungsvorrichtung 12b, angenommen werden.

Bevorzugt ist die Lagereinheit 38b seitlich der Objektträgereinheit 36b angeordnet, um eine Sichtlinie der Objektdatenerfassungseinheit 14b auf das Objekt 10b nicht zu blockieren. Die Lagereinheit 38b umgreift die Objektträgereinheit 36b zumindest teilweise. Die Objektträgereinheit 36b weist insbesondere eine Nut 114b zur Aufnahme eines Abrollelements 116b der Lagereinheit 38b auf. Die Nut 114b und das Abrollelement 116b könnten beispielsweise auch als Zahnstangengetriebe ausgebildet sein. Insbesondere sind die Drehachsen des Abrollelements 116b beweglich gelagert, um eine Arretierung/ein Loslösen der Objektträgereinheit 36b an/von der Lagereinheit 38b zu ermöglichen.

Die Erfassungsvorrichtung umfasst eine Kontrasteinheit 72b, wobei die Bewegungsvorrichtung 12b eine Antriebseinheit 76b zu einer automatisierten Bewegung der Kontrasteinheit 72b umfasst. Die Erfassungsvorrichtung umfasst eine Kontrasteinheit 72b, wobei die Bewegungsvorrichtung 12b eine Bewegungseinheit 78b aufweist, die dazu vorgesehen ist, die Kontrasteinheit 72b und die Objektdatenerfassungseinheit 14b simultan zu bewegen. Insbesondere synchronisiert die Bewegungseinheit 78b die Antriebseinheiten 76b und die nicht näher dargestellte Antriebseinheit der Bewegungseinheit 24b. Vorzugsweise ist die Recheneinheit 18b und die Bewegungseinheit 78b als eine einzelne zentrale Recheneinheit ausgebildet.

Eine Abmessungserfassungseinheit 88b weist eine von der Objektdatenerfassungseinheit 14b unabhängige Bewegungseinheit, insbesondere einen Führungsschlitten, auf.

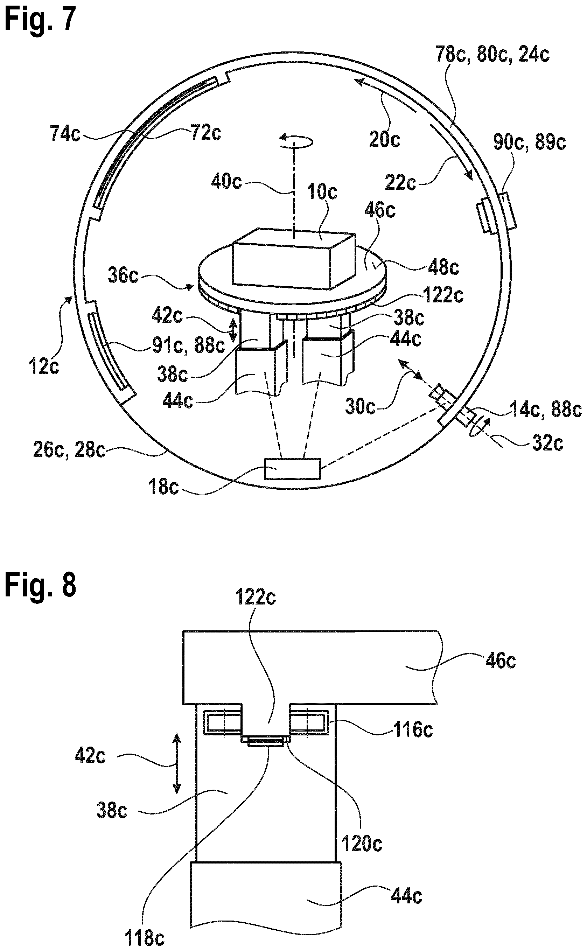

In Figur 7 umfasst die Erfassungsvorrichtung eine Kontrasteinheit 72c, wobei die Bewegungseinheit 78c eine Struktureinheit 80c aufweist, die in zumindest einem Betriebszustand die Kontrasteinheit 72c und die Objektdatenerfassungseinheit 14c im Wesentlichen starr miteinander verbindet. Insbesondere ist die Struktureinheit 80c als gemeinsamer Führungsschlitten ausgebildet. Bevorzugt ist die Kontrasteinheit 72c zu einer aktiven Beleuchtung vorgesehen. Eine Lichtquelle 74c ist insbesondere von der Objektträgereinheit 36c aus betrachtet, hinter der Kontrasteinheit 72c angeordnet. Die Erfassungsvorrichtung umfasst eine Durchstrahleinheit 89c, insbesondere Röntgeneinheit, die dazu vorgesehen ist, zumindest ein Objekt 10c zumindest teilweise zu durchstrahlen. Vorzugsweise umfasst die Durchstrahleinheit 89c zumindest eine Strahlquelle 90c und einen Schirm 91c. Bevorzug ist die Durchstrahleinheit 89c an der Bewegungseinheit 24c der Objektdatenerfassungseinheit 14c angeordnet. Bevorzugt wird die Objektdatenerfassungseinheit 14c gleichzeitig als Abmessungserfassungseinheit 88c genutzt, indem die multiplen Objektdatensätze insbesondere mit einer Drehgeschwindigkeit der Objektträgereinheit 36c um die Schwenk- und/oder Drehachse 40c verknüpft werden.

Figur 7 und 8 zeigen eine schematische Darstellung der Lagereinheit 38c. Die Lagereinheit 38c ist vorzugsweise zweiteilig ausgebildet. Die Lagereinheit 38c ist dazu vorgesehen, einen auf der dem Objekt 10c abgewandten Seite der Objektträgereinheit 36c angeordneten Antriebsring 122c in einer Nut 120c der Lagereinheit aufzunehmen.

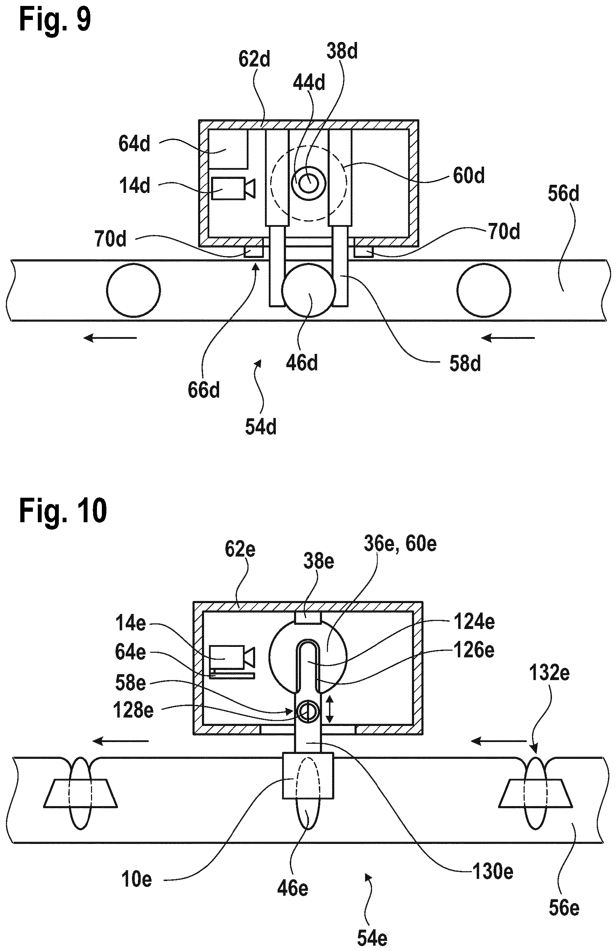

Figur 9 zeigt eine Erfassungsvorrichtung, bei der die Transporteinheit 54d seitlich der Gehäuseeinheit 62d angeordnet ist. Die Transporteinheit 54d umfasst eine Positionierungseinheit 58d zu einer Positionierung eines Objektes, insbesondere von der Bahnfördereinheit 56d herunter, in einem Objekterfassungsbereich 60d. Insbesondere ist die Positioniereinheit 58d als ausfahrbare Greifeinheiten ausgebildet, die unter einen Objektträger 46d auf der Transporteinheit 54d geschoben werden. Bevorzugt weisen die Objektträger 46d auf der der Bahnfördereinheit 56d zugewandten Seite eine Ausnehmung zur Aufnahme einer Greifeinheit auf. Bevorzugt wird bei einem Zurückziehen der Greifeinheiten eine Verbindung des Objektträgers 46d mit der Lagereinheit 40d hergestellt.

Die Erfassungsvorrichtung umfasst eine Antischmutzeinheit 64d, die dazu vorgesehen ist, eine Verschmutzung eines Objekterfassungsbereichs 60d und/oder eines Bereichs einer Objektdatenerfassungseinheit 14d, insbesondere innerhalb der Gehäuseeinheit 62d, zumindest zu reduzieren. Die Antischmutzeinheit 64d ist dazu vorgesehen, innerhalb der Gehäuseeinheit 62d einen Überdruck zu erzeugen. Insbesondere wird durch die Anordnung der Antischmutzeinheit 64d von der Öffnung der Gehäuseeinheit 62d aus gesehen hinter der Objektdatenerfassungseinheit 14d und/oder hinter dem Objekterfassungsbereich 60d, ein Fluidstrom erzeugt, der von der Objektdatenerfassungseinheit 14d und/oder dem Objekterfassungsbereich 60d zur Öffnung der Gehäuseeinheit 62d gerichtet ist. Vorteilhaft wird ein Eindringen von Staub und/oder anderen Schmutzpartikeln reduziert. Die Erfassungsvorrichtung weist eine Aufbereitungseinheit 66d auf, die dazu vorgesehen ist, zumindest ein Objekt vor einer Objektdatensatzerfassung aufzubereiten, insbesondere zu reinigen. Die Aufbereitungseinheit 66d weist eine Fluidkontrolleinheit 70d zu einer Steuerung und/oder Regelung eines Fluidstroms auf. Insbesondere umfasst die Fluidkontrolleinheit Luftdüsen. Bevorzugt erzeugt die Fluidkontrolleinheit 70d einen Luftstrom, der von der Gehäuseeinheit 62d weggerichtet ist. Bevorzugt ist ein von der Fluidkontrolleinheit 70d erzeugter Luftstrom auf einen Objektträger 46d gerichtet, der sich vor der Öffnung der Gehäuseeinheit 62d befindet. Bevorzugt ist ein von der Fluidkontrolleinheit 70d erzeugter Luftstrom dazu vorgesehen, Staubpartikel und andere Verschmutzungen, die sich auf dem Objektträger 46d und/oder auf einem Objekt auf dem Objektträger 46d befinden, wegzublasen, insbesondere in eine von der Gehäuseeinheit 62d abgewandte Richtung.

Figur 10 zeigt eine Erfassungsvorrichtung, bei der die Transporteinheit 54e seitlich der Gehäuseeinheit 62e angeordnet ist. Die Transporteinheit 54e umfasst eine Positionierungseinheit 58e, zu einer Positionierung eines Objektes, insbesondere von der Bahnfördereinheit 56e herunter, in einem Objekterfassungsbereich 60e. Insbesondere weist die Positioniereinheit 58e einen Magnetfuß 128e auf, der in einer Führungsbahn 130e beweglich gelagert ist. Bevorzugt weist der Magnetfuß 128e einen Elektromagneten zu einem Schalten der Magnetkraft auf. Alternativ weist der Magnetfuß einen Permanentmagneten auf. Bevorzugt wird der Magnetfuß 128e automatisch unter einen Objektträger 46e auf der Bahnfördereinheit 56e geschoben. Bevorzugt weist die Bahnfördereinheit 56e eine Ausnehmung 132e auf, durch welche der Magnetfuß 128e eine kraftschlüssige Verbindung mit dem Objektträger 46e herstellt. Bevorzugt wird der Objektträger 46e durch die Ausnehmung 132e von der Bahnfördereinheit 56e zur Objektträgereinheit 36e geführt. Vorzugweise weist die Objektträgereinheit 36e ein zu dem Objektträger 46e komplementäres Gegenstück auf. Insbesondere ergänzen sich das Gegenstück und der Objektträger 36e in zumindest einem vorgesehenen Betriebszustand zu einer im Wesentlichen kreisförmigen Scheibe. Insbesondere weist die Objektträgereinheit 36e eine Ausnehmung 124e auf, welche im Wesentlichen als eine Negativform des Objektträgers 46e ausgebildet ist. Insbesondere weist die Ausnehmung 124e einen Absatz 126e zu einer Ablage des Objektträgers 46e auf. Die Erfassungsvorrichtung umfasst eine Antischmutzeinheit 64e, die dazu vorgesehen ist, eine Verschmutzung eines Bereichs einer Objektdatenerfassungseinheit 14e, insbesondere innerhalb der Gehäuseeinheit 62e, zumindest zu reduzieren. Insbesondere ist die Antischmutzeinheit 64e als Luftdüse ausgebildet. Insbesondere erzeugt die Antischmutzeinheit 64e einen konstanten Luftstrom, der von der Objektdatenerfassungseinheit 14e weggerichtet ist.

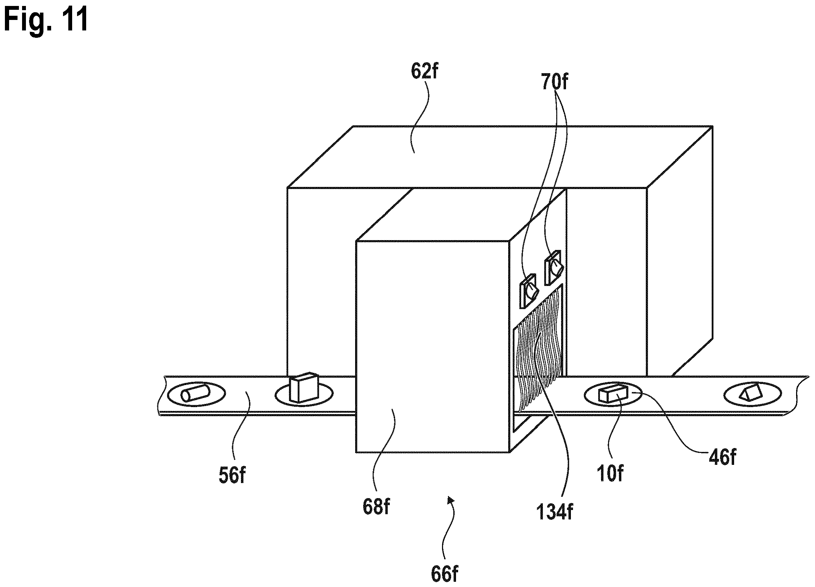

Figur 11 zeigt die Erfassungsvorrichtung mit einer Aufbereitungseinheit 66f, die dazu vorgesehen ist, zumindest ein Objekt 10f vor einer Objektdatensatzerfassung aufzubereiten, insbesondere zu reinigen. Die Aufbereitungseinheit 66f umfasst eine Schleuseneinheit 68f. Insbesondere weist die Schleuseneinheit 68f eine Fluidrestriktionseinheit 134f auf. Die Fluidrestriktionseinheit 134f weist insbesondere Kunststofflamellen auf. Bevorzugt erzeugt die Fluidrestriktionseinheit 134f einen Strömungswiderstand, insbesondere für eine Strömung in die Schleuseneinheit 68f hinein. Die Aufbereitungseinheit 66f weist eine Fluidkontrolleinheit 70f zu einer Steuerung und/oder Regelung eines Fluidstroms auf. Bevorzugt erzeugt die Fluidkontrolleinheit 70f einen Luftstrom, der von der Schleuseneinheit 68f weggerichtet ist. Bevorzugt ist ein von der Fluidkontrolleinheit 70f erzeugter Luftstrom auf einen Objektträger 46f gerichtet, der sich unmittelbar vor der Fluidrestriktionseinheit 134f befindet. Bevorzugt ist ein von der Fluidkontrolleinheit 70f erzeugter Luftstrom dazu vorgesehen Staubpartikel und andere Verschmutzungen, die sich auf dem Objektträger 46f und/oder auf einem Objekt 10f befinden, wegzublasen, insbesondere in eine von der Schleuseneinheit 68f abgewandte Richtung. Es ist denkbar, dass innerhalb der Schleuseneinheit 68f weitere Fluidkontrolleinheiten angebracht sind, beispielsweise zur Erzeugung eines Überdrucks in der Schleuseneinheit 68f. Es ist auch denkbar, dass die Schleuseneinheit ein Fluidkontrolleinheit zur Erzeugung eines Wasserstrahls aufweist, um ein sich in der Schleuseneinheit 68f befindliches Objekt zu reinigen. Bevorzugt weist die Schleuseneinheit 68f eine Fluidkontrolleinheit in Form eines Heizgebläses auf, um ein in der Schleuseneinheit 68f befindliches Objekt zu trocknen.

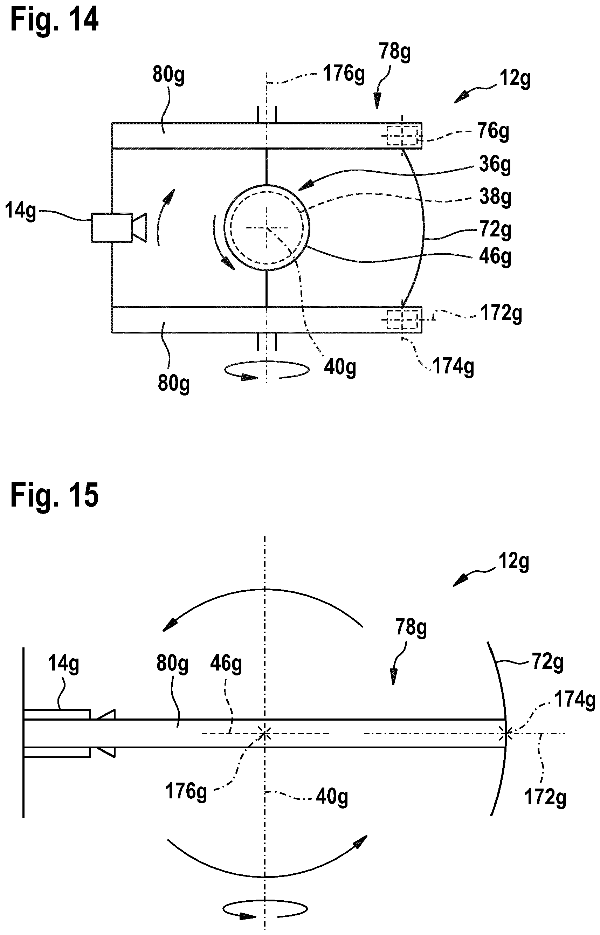

Figuren 14 und 15 zeigen eine alternative Erfassungsvorrichtung zu einer zumindest teilautomatisierten Erfassung von multiplen Objektdatensätzen zumindest eines Objekts (hier nicht näher dargestellt). Die Erfassungsvorrichtung umfasst zumindest eine Bewegungsvorrichtung 12g zur Erzeugung einer definierten Relativbewegung zwischen zumindest einer Objektdatenerfassungseinheit 14g der Erfassungsvorrichtung und des zumindest einen Objekts und/oder einer Objektträgereinheit 36g der Erfassungsvorrichtung. Die in den Figuren 14 und 15 dargestellte Erfassungsvorrichtung weist eine zumindest im Wesentlichen analoge Ausgestaltung zu der in der Beschreibung der Figuren 1 bis 3 beschriebenen Erfassungsvorrichtung auf, so dass bezüglich einer Ausgestaltung der in den Figuren 14 und 15 dargestellten Erfassungsvorrichtung zumindest im Wesentlichen auf die Beschreibung der Figuren 1 bis 3 verwiesen werden kann.

Erfindungsgemäß und im Unterschied zu der in der Beschreibung der Figuren 1 bis 3 beschriebenen Erfassungsvorrichtung weist die in den Figuren 14 und 15 dargestellte Erfassungsvorrichtung vorzugsweise eine Kontrasteinheit 72g auf, die in zumindest einem Betriebszustand der Erfassungsvorrichtung zusammen mit der Objektdatenerfassungseinheit 14g relativ zur Objektträgereinheit 36g beweglich gelagert ist, insbesondere mittels der Bewegungsvorrichtung 12g. Die Bewegungsvorrichtung 12g umfasst vorzugsweise eine Bewegungseinheit 78g, die dazu vorgesehen ist, die Kontrasteinheit 72g und die Objektdatenerfassungseinheit 14g simultan zu bewegen. Die Bewegungseinheit 78g weist eine Struktureinheit 80g auf, die in zumindest einem Betriebszustand die Kontrasteinheit 72g und die Objektdatenerfassungseinheit 14g im Wesentlichen starr miteinander verbindet, insbesondere um eine gemeinsame Bewegung der Kontrasteinheit 72g und der Objektdatenerfassungseinheit 14g zu realisieren. Alternativ oder zusätzlich ist die Kontrasteinheit 72g mittels der Bewegungsvorrichtung 12g relativ zur Objektdatenerfassungseinheit 14g beweglich gelagert. Vorzugsweise ist die Kontrasteinheit 72g mittels der Bewegungseinheit 78g beweglich entlang einer Translationsachse 172g der Bewegungsvorrichtung 12g und/oder um eine Kippachse 174g der Bewegungsvorrichtung 12g relativ zur Objektdatenerfassungseinheit 14g beweglich gelagert. Bevorzugt verläuft die Translationsachse 172g quer, insbesondere zumindest im Wesentlichen senkrecht, zur Kippachse 174g. Die Bewegungsvorrichtung 12g umfasst insbesondere eine Antriebseinheit 76g zu einer automatisierten Bewegung der Kontrasteinheit 72g.

Die Objektdatenerfassungseinheit 14g und/oder die Kontrasteinheit 72g sind/ist vorzugsweise mittels der Bewegungsvorrichtung 12g um eine Schwenk- und/oder Drehachse 40g einer Lagereinheit 38g der Bewegungsvorrichtung 12g relativ zur Objektträgereinheit 36g beweglich gelagert. Die Bewegungsvorrichtung 12g umfasst vorzugsweise eine Antriebseinheit (hier nicht näher dargestellt), die dazu vorgesehen ist, die Objektdatenerfassungseinheit 14g, vorzugsweise zusammen mit der Kontrasteinheit 72g, insbesondere in zumindest einem Betriebszustand der Erfassungsvorrichtung, gegenläufig zu einer Bewegung der Objektträgereinheit 36g zu bewegen, insbesondere um die Schwenk- und/oder Drehachse 40g der Lagereinheit 38g. Die Objektdatenerfassungseinheit 14g und/oder die Kontrasteinheit 72g sind vorzugsweise ferner mittels der Bewegungsvorrichtung 12g um eine quer, insbesondere zumindest im Wesentlichen senkrecht, zur Schwenkund/oder Drehachse 40g der Lagereinheit 38g verlaufenden Horizontalachse 176g der Bewegungsvorrichtung 12g relativ zur Objektträgereinheit 36g beweglich gelagert. Es ist denkbar, dass die Objektträgereinheit 36g derart gelagert ist, dass eine Tragstruktur der Erfassungsvorrichtung, an der die Objektträgereinheit 36g fixiert ist oder beweglich gelagert ist, eine Hauptlängsachse aufweist, die zumindest im Wesentlichen parallel, insbesondere koaxial, zur Horizontalachse 176g verläuft. Bevorzugt verläuft die Translationsachse 172g quer, insbesondere zumindest im Wesentlichen senkrecht, zur Horizontalachse 176g. Vorzugsweise verläuft die Kippachse 174g zumindest im Wesentlichen parallel zur Horizontalachse 176g.

Vorteilhafterweise ist die Objektdatenerfassungseinheit 14g und/oder die Kontrasteinheit 72g mittels der Bewegungsvorrichtung 12g bei einer Anordnung der Objektträgereinheit 36g an der Tragstruktur, betrachtet in einer Vertikalebene, um die Objektträgereinheit 36g herum beweglich gelagert. Vorzugsweise ist die Objektdatenerfassungseinheit 14g und/oder die Kontrasteinheit 72g mittels der Bewegungsvorrichtung 12g entlang eines Winkelbereichs von weniger als 360°, insbesondere von weniger als 270°, bevorzugt von weniger als 180° relativ zu einer Horizontalebene der Erfassungsvorrichtung beweglich um die Horizontalachse 178g gelagert. Andere, einem Fachmann als sinnvoll erscheinende Bewegungsmöglichkeiten der Objektdatenerfassungseinheit 14g, der Kontrasteinheit 72g und/oder der Objektträgereinheit 36g relativ zueinander sind ebenfalls denkbar. Hinsichtlich weiterer Merkmale und Funktionen der in den Figuren 14 und 15 dargestellten Erfassungsvorrichtung darf insbesondere auf die in der Beschreibung der Figuren 1 bis 3 beschriebene Erfassungsvorrichtung verwiesen werden.

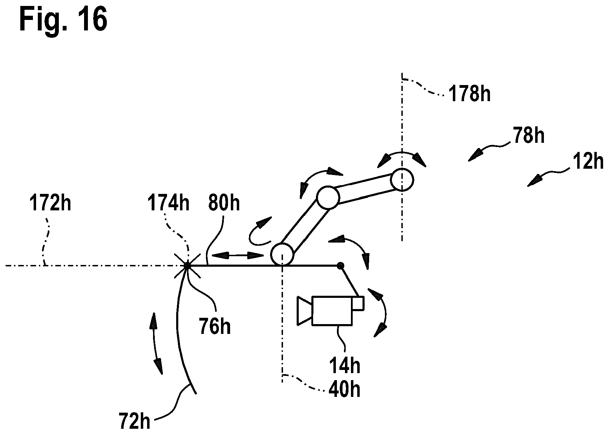

Figur 16 zeigt eine weitere alternative Erfassungsvorrichtung zu einer zumindest teilautomatisierten Erfassung von multiplen Objektdatensätzen zumindest eines Objekts (hier nicht näher dargestellt). Die Erfassungsvorrichtung umfasst zumindest eine Bewegungsvorrichtung 12h zur Erzeugung einer definierten Relativbewegung zwischen zumindest einer Objektdatenerfassungseinheit 14h der Erfassungsvorrichtung und des zumindest einen Objekts und/oder einer Objektträgereinheit (hier nicht näher dargestellt) der Erfassungsvorrichtung. Die in der Figur 16 dargestellte Erfassungsvorrichtung weist eine zumindest im Wesentlichen analoge Ausgestaltung zu der in der Beschreibung der Figuren 1 bis 3 und in der Beschreibung der Figuren 14 und 15 beschriebenen Erfassungsvorrichtungen auf, so dass bezüglich einer Ausgestaltung der in der Figur 16 dargestellten Erfassungsvorrichtung zumindest im Wesentlichen auf die Beschreibung der Figuren 1 bis 3 und der Figuren 14 und 15 verwiesen werden kann.

Im Unterschied zu der in der Beschreibung der Figuren 1 bis 3 und in der Beschreibung der Figuren 14 und 15 beschriebenen Erfassungsvorrichtungen weist die in der Figur 16 dargestellte Erfassungsvorrichtung die Objektdatenerfassungseinheit 14h und zumindest eine Kontrasteinheit 72h auf, die mittels der Bewegungsvorrichtung 12h beweglich gelagert sind, wobei die Bewegungsvorrichtung 12h eine Bewegungseinheit 78g aufweist, die als mehrachsiger Roboterarm ausgebildet ist. Des Weiteren ist denkbar, dass die Objektdatenerfassungseinheit 14h und/oder die Kontrasteinheit 72h der in der Figur 16 dargestellten Erfassungsvorrichtung zusätzlich zu einer beweglichen Lagerung um eine Schwenk- und/oder Drehachse 40h beweglich um eine weitere Schwenk- und/oder Drehachse 178h der Bewegungsvorrichtung 12h beweglich gelagert ist. Die weitere Schwenk- und/oder Drehachse 178h verläuft vorzugsweise zumindest im Wesentlichen parallel zur Schwenk- und/oder Drehachse 40h.

Vorzugsweise sind die Objektdatenerfassungseinheit 14h und die Kontrasteinheit 72h zusammen mittels der Bewegungsvorrichtung 12h um mehr als zwei, insbesondere um zumindest drei, zueinander zumindest im Wesentlichen parallel verlaufenden Achsen der als mehrachsigen Roboterarm ausgebildeten Bewegungseinheit 78g beweglich gelagert. Es ist denkbar, dass die Objektdatenerfassungseinheit 14h mittels der Bewegungsvorrichtung 12h zusätzlich um zwei weitere zueinander zumindest im Wesentlichen parallel verlaufenden Achsen der als mehrachsigen Roboterarm ausgebildeten Bewegungseinheit 78g relativ zur Kontrasteinheit 72h beweglich gelagert ist. Hinsichtlich weiterer Merkmale und Funktionen der in der Figur 16 dargestellten Erfassungsvorrichtung darf insbesondere auf die in der Beschreibung der Figuren 1 bis 3 und in der Beschreibung der Figuren 14 und 15 beschriebenen Erfassungsvorrichtungen verwiesen werden.

## Patentansprüche

1. Erfassungsvorrichtung zu einer zumindest teilautomatisierten Erfassung von multiplen Objektdatensätzen zumindest eines Objekts (10a, 10b, 10c, 10e, 10f), mit einer Bewegungsvorrichtung (12a, 12b, 12c, 12g, 12h) zur Erzeugung einer definierten Relativbewegung zwischen zumindest einer Objektdatenerfassungseinheit (14a, 14b, 14c, 14d, 14e, 14g, 14h) und des zumindest einen Objekts (10a, 10b, 10c, 10e, 10f), **gekennzeichnet durch** die Objektdatenerfassungseinheit (14b, 14c, 14g, 14h) und zumindest eine Kontrasteinheit (72b, 72c, 72g, 72h), wobei die Bewegungsvorrichtung (12b, 12c, 12g, 12h) eine Bewegungseinheit (78b, 78c, 78g, 78h) aufweist, die dazu vorgesehen ist, die Kontrasteinheit (72b, 72c, 72g, 72h) und die Objektdatenerfassungseinheit (14b, 14c, 14g, 14h) simultan zu bewegen, und/oder wobei die Bewegungseinheit (78c, 78g, 78h) eine Struktureinheit (80c, 80g, 80h) aufweist, die in zumindest einem Betriebszustand die Kontrasteinheit (72c, 72g, 72h) und die Objektdatenerfassungseinheit (14c, 14g, 14h) im Wesentlichen starr miteinander verbindet.

2. Erfassungsvorrichtung nach Anspruch 1, **gekennzeichnet durch** zumindest eine Kontrasteinheit (72a, 72b, 72c, 72g, 72h), die zu einer aktiven Beleuchtung vorgesehen ist.

3. Erfassungsvorrichtung nach Anspruch 1 oder 2, **gekennzeichnet durch** zumindest eine Kontrasteinheit (72a, 72b, 72c, 72g, 72h), welche zumindest eine Lichtquelle (74a, 74c, 74g, 74h) aufweist.

4. Erfassungsvorrichtung nach einem der vorhergehenden Ansprüche, **gekennzeichnet durch** zumindest eine Kontrasteinheit (72a, 72g, 72h), welche zumindest eine Leuchtdiode, insbesondere zumindest eine organische Leuchtdiode, aufweist.

5. Erfassungsvorrichtung nach einem der vorhergehenden Ansprüche, **gekennzeichnet durch** zumindest eine Kontrasteinheit (72b, 72c, 72g, 72h), wobei die Bewegungsvorrichtung (12b, 12c, 12g, 12h) eine Antriebseinheit (76b, 76g, 76h) zu einer automatisierten Bewegung der Kontrasteinheit (72b, 72c, 72g, 72h) umfasst.

6. System mit einer Erfassungsvorrichtung nach einem der vorhergehenden Ansprüche, mit einer Speichereinheit (92a, 92b) mit zumindest teilweise mit der Erfassungsvorrichtung erzeugten Datensätzen und mit einer mobilen Erfassungseinheit (94a, 94b) sowie mit einer Recheneinheit (16a, 16b), die dazu vorgesehen ist, mit der mobilen Erfassungseinheit (94a, 94b) erfasste Daten zumindest unter Berücksichtigung der Speichereinheit (92a, 92b) auszuwerten.

7. Verfahren zu einer Erfassung von multiplen Objektdatensätzen zumindest eines Objekts, mit einer Erfassungsvorrichtung nach einem der Ansprüche 1 bis 5 und/oder mit einem System nach Anspruch 6, **dadurch gekennzeichnet, dass** in zumindest einem Verfahrensschritt zumindest eine Kenngröße, insbesondere eine Bewegungskenngröße und/oder eine Positionskenngröße, einer Kontrasteinheit (72c, 72g, 72h) der Erfassungsvorrichtung in Abhängigkeit von einer Kenngröße eines zu erfassenden Objekts (10a, 10b, 10c, 10e, 10f), von einer Kenngröße der Objektdatenerfassungseinheit (14b, 14c, 14g, 14h) und/oder von einer Kenngröße einer Beleuchtungseinheit der Erfassungsvorrichtung geändert wird.

## Claims

1. Acquisition device for at least partly automated acquisition of multiple object data sets of at least one object (10a, 10b, 10c, 10e, 10f), comprising a movement device (12a, 12b, 12c, 12g, 12h) for generating a defined relative movement between at least one object data acquisition unit (14a, 14b, 14c, 14d, 14e, 14g, 14h) and the at least one object (10a, 10b, 10c, 10e, 10f), **characterized by** the object data acquisition unit (14b, 14c, 14g, 14h) and at least one contrast unit (72b, 72c, 72g, 72h), the movement device (12b, 12c, 12g, 12h) comprising a movement unit (78b, 78c, 78g, 78h) provided for simultaneously moving the contrast unit (72b, 72c, 72g, 72h) and the object data acquisition unit (14b, 14c, 14g, 14h), and/or the movement unit (78c, 78g, 78h) comprising a structural unit (80c, 80g, 80h) which, in at least one operating state, substantially rigidly connects the contrast unit (72c, 72g, 72h) and the object data acquisition unit (14c, 14g, 14h) to one another.

2. Acquisition device according to Claim 1, **characterized by** at least one contrast unit (72a, 72b, 72c, 72g, 72h) provided for active illumination.

3. Acquisition device according to Claim 1 or 2, **characterized by** at least one contrast unit (72a, 72b, 72c, 72g, 72h) comprising at least one light source (74a, 74c, 74g, 74h).

4. Acquisition device according to any of the preceding claims, **characterized by** at least one contrast unit (72a, 72g, 72h) comprising at least one light-emitting diode, in particular at least one organic light-emitting diode.

5. Acquisition device according to any of the preceding claims, **characterized by** at least one contrast unit (72b, 72c, 72g, 72h), the movement device (12b, 12c, 12g, 12h) comprising a drive unit (76b, 76g, 76h) for automated movement of the contrast unit (72b, 72c, 72g, 72h).

6. System comprising an acquisition device according to any of the preceding claims, comprising a storage unit (92a, 92b) with data sets generated at least partly by the acquisition device, and comprising a mobile acquisition unit (94a, 94b) and also comprising a computing unit (16a, 16b) provided for evaluating data acquired by the mobile acquisition unit (94a, 94b), at least taking account of the storage unit (92a, 92b).

7. Method for acquiring multiple object data sets of at least one object, by means of an acquisition device according to any of Claims 1 to 5 and/or by means of a system according to Claim 6, **characterized in that** in at least one method step at least one characteristic variable, in particular a movement characteristic variable and/or a position characteristic variable, of a contrast unit (72c, 72g, 72h) of the acquisition device is changed depending on a characteristic variable of an object (10a, 10b, 10c, 10e, 10f) to be acquired, on a characteristic variable of the object data acquisition unit (14b, 14c, 14g, 14h) and/or on a characteristic variable of an illumination unit of the acquisition device.

## Revendications

1. Dispositif d'acquisition servant à une acquisition au moins partiellement automatisée de plusieurs ensembles de données d'objet d'au moins un objet (10a, 10b, 10c, 10e, 10f), comprenant un dispositif de déplacement (12a, 12b, 12c, 12g, 12h) servant à générer un déplacement relatif défini entre au moins une unité d'acquisition de données d'objet (14a, 14b, 14c, 14d, 14e, 14g, 14h) et ledit au moins un objet (10a, 10b, 10c, 10e, 10f), **caractérisé par** l'unité d'acquisition de données d'objet (14b, 14c, 14g, 14h) et au moins une unité de contraste (72b, 72c, 72g, 72h), le dispositif de déplacement (12b, 12c, 12g, 12h) présentant une unité de déplacement (78b, 78c, 78g, 78h) qui est prévue pour déplacer simultanément l'unité de contraste (72b, 72c, 72g, 72h) et l'unité d'acquisition de données d'objet (14b, 14c, 14g, 14h), et/ou l'unité de déplacement (78c, 78g, 78h) présentant une unité structurelle (80c, 80g, 80h) qui relie dans au moins un état de fonctionnement l'unité de contraste (72c, 72g, 72h) et l'unité d'acquisition de données d'objet (14c, 14g, 14h) de manière substantiellement rigide l'une à l'autre.

2. Dispositif d'acquisition selon la revendication 1, **caractérisé par** au moins une unité de contraste (72a, 72b, 72c, 72g, 72h) qui est prévue pour un éclairage actif.

3. Dispositif d'acquisition selon la revendication 1 ou 2, **caractérisé par** au moins une unité de contraste (72a, 72b, 72c, 72g, 72h) qui présente au moins une source de lumière (74a, 74c, 74g, 74h).

4. Dispositif d'acquisition selon l'une quelconque des revendications précédentes, **caractérisé par** au moins une unité de contraste (72a, 72g, 72h) qui présente au moins une diode électroluminescente, en particulier au moins une diode électroluminescente organique.

5. Dispositif d'acquisition selon l'une quelconque des revendications précédentes, **caractérisé par** au moins une unité de contraste (72b, 72c, 72g, 72h), le dispositif de déplacement (12b, 12c, 12g, 12h) comprenant une unité d'entraînement (76b, 76g, 76h) servant à un déplacement automatisé de l'unité de contraste (72b, 72c, 72g, 72h).

6. Système comprenant un dispositif d'acquisition selon l'une quelconque des revendications précédentes, comprenant une unité de mémoire (92a, 92b) avec des ensembles de données générés au moins partiellement par le dispositif d'acquisition, et une unité d'acquisition mobile (94a, 94b), ainsi qu'une unité de calcul (16a, 16b) qui est prévue pour évaluer des données acquises par l'unité d'acquisition mobile (94a, 94b) au moins en tenant compte de l'unité de mémoire (92a, 92b).

7. Procédé permettant d'acquérir plusieurs ensembles de données d'objet d'au moins un objet, à l'aide d'un dispositif d'acquisition selon l'une quelconque des revendications 1 à 5 et/ou d'un système selon la revendication 6, **caractérisé en ce que** dans au moins une étape de procédé, au moins une grandeur caractéristique, en particulier une grandeur caractéristique de déplacement, et/ou une grandeur caractéristique de position, d'une unité de contraste (72c, 72g, 72h) du dispositif d'acquisition est modifiée en fonction d'une grandeur caractéristique d'un objet à acquérir (10a, 10b, 10c, 10e, 10f), d'une grandeur caractéristique de l'unité d'acquisition de données d'objet (14b, 14c, 14g, 14h) et/ou d'une grandeur caractéristique d'une unité d'éclairage du dispositif d'acquisition.
